# EUROPÄISCHE PATENTANMELDUNG

(11) **EP 2 746 046 A1**
(43) Veröffentlichungstag der Anmeldung: **25.06.2014**
(21) Anmeldenummer: 12198791.1
(22) Anmeldetag: 21.12.2012
(51) Int. Cl.: B32B 25/08, B32B 27/34, C08L 65/00, C08L 77/00

(54) **Verbundteil**

(71) Anmelder: LANXESS Deutschland GmbH, 50569 Köln (DE)
(72) Erfinder: Dederichs Thomas, 50679 Köln (DE); Früh Thomas, 42105 Wuppertal (DE); Bischoff Andreas, 41542 Dormagen (DE); Giese Ulrich, 31191 Algermissen (DE); Thust Torsten, 30171 Hannover (DE)

(57) **Zusammenfassung**

Die Erfindung betrifft ein Verbundteil, das mittels 2-Komponenten-Verarbeitungsverfahren, bevorzugt 2-Komponenten-Spritzguss (2K-Spritzguss), aus mindestens einem Teilstück aus mindestens einer Polyalkenamer-additivierten, bevorzugt 1,8-trans-Polyoctenamer-additivierten, Polyamidformmasse und mindestens einem Teilstück aus wenigstens einem mit elementarem Schwefel zu vulkanisierenden bzw. zu vernetzenden Kautschuk hergestellt wird bzw. nach deren Verarbeitung aus diesen Komponenten zusammengesetzt ist, ohne dass ein Haftvermittler eingesetzt wird. Die einzelnen Teilstücke des Verbundteils sind makroskopische Formteile, nicht jedoch z.B. dispergierte Partikel in einem Kunststoff-Elastomer-Blend. Solche Blends sind daher keine Verbundteile im Sinne der Erfindung. Gegenstand der Erfindung ist auch ein Verfahren zur Herstellung derartiger Verbundteile sowie die Verwendung von Polyalkenamer, bevorzugt 1,8-trans-Polyoctenamer, zur Verbesserung der Verbundhaftung Polyamid- basierter Formteile mit einer mit Schwefel zu vulkanisierenden Kautschuk Komponente und die Verwendung von Polyalkenamer, bevorzugt 1,8-trans-Polyoctenamer, zur Reduktion des Schmelzpunktes bzw. Erweichungspunktes von Polyamid.

## Beschreibung

Die Erfindung betrifft ein Verbundteil, das mittels 2-Komponenten-Verarbeitungsverfahren, bevorzugt 2-Komponenten-Spritzguss (2K-Spritzguss), aus mindestens einem Teilstück aus mindestens einer Polyalkenamer-additivierten, bevorzugt 1,8-trans-Polyoctenamer-additivierten, Polyamidformmasse und mindestens einem Teilstück aus wenigstens einem mit elementarem Schwefel zu vulkanisierenden bzw. zu vernetzenden Kautschuk hergestellt wird bzw. nach deren Verarbeitung aus diesen Komponenten zusammengesetzt ist, ohne dass ein Haftvermittler eingesetzt wird. Die einzelnen Teilstücke des Verbundteils sind makroskopische Formteile, nicht jedoch z.B. dispergierte Partikel in einem Kunststoff-Elastomer-Blend. Solche Blends sind daher keine Verbundteile im Sinne der Erfindung. Gegenstand der Erfindung ist auch ein Verfahren zur Herstellung derartiger Verbundteile sowie die Verwendung von Polyalkenamer, bevorzugt 1,8-trans-Polyoctenamer, zur Verbesserung der Verbundhaftung Polyamid-basierter Formteile mit einer mit Schwefel zu vulkanisierenden Kautschuk Komponente und die Verwendung von Polyalkenamer, bevorzugt 1,8-trans-Polyoctenamer, zur Reduktion des Schmelzpunktes bzw. Erweichungspunktes von Polyamid.

Als Polyalkenamer im Sinne der vorliegenden Erfindung wird bevorzugt wenigstens ein Poly-C₄-C₁₅-alkenylen, besonders bevorzugt wenigstens ein Polyalkenamer der Reihe Polybutadien, Polyisopren, Polypentenamer, Polyoctenamer (Polyoctenylen), Poly(3-methyloctenamer), Polydecenamer, Poly(3-methyldecenamer), Polydodecenamer, Polynorbornen (Poly-1,3-cyclopentylen-vinylen) oder Polydicyclopentadien eingesetzt (H.-G. Elias, "Macromolecules, Volume 2: Industrial Polymers and Syntheses", WILEY-VCH Verlag GmbH, Weinheim, 2007, S. 252 bis 256).

Poly-C₄-C₁₅-alkenylene sind erhältlich durch ringöffnende Metathese-Polymerisation eines Cycloolefins, bevorzugt eines C₅-C₂₀-Cycloolefins. In einer besonders bevorzugten Ausführungsform werden in der ringöffnenden Metathese Cyclopenten, Cyclohepten, Cycloocten, Cyclodecen, Cyclododecen, Norbornen oder Dicyclopentadien eingesetzt.

Alternativ zur ringöffnenden Metathese können Poly-C₄-C₁₅-alkenylene auch durch partielle Hydrogenierung von Polyalkenylenen, beispielsweise Polybutadien, oder durch andere Methoden hergestellt werden.

Erfindungsgemäß wird das Polyalkenamer einzeln oder in Kombinationen mehrerer Polyalkenamere eingesetzt. Insbesondere bevorzugt wird erfindungsgemäß 1,8-trans-Polyoctenamer eingesetzt, wofür im Rahmen der vorliegenden Erfindung die Abkürzung TOR (1,8-trans-polyoctenamer rubber) verwendet wird. Das erfindungsgemäß insbesondere bevorzugt einzusetzende 1,8-trans-Polyoctenamer, CAS Nr. 28730-09-8, auch als trans-Polyoctenylen bezeichnet, erhält man durch ringöffnende Metathese-Polymerisation aus Cycloocten und es umfasst sowohl makrocyclische als auch lineare Polymere. TOR ist ein niedermolekularer Spezial-Kautschuk mit bimodaler Molmassenverteilung.

Im Handel erhältlich ist 1,8-trans-Polyoctenamer als Vestenamer® 8012, laut Herstellerangaben ein 1,8-trans-Polyoctenamer-Kautschuk mit einem mittleren Molekulargewicht von 1,0 • 105 g/mol und einem trans/cis Doppelbindungsverhältnis von 80:20, sowie Vestenamer® 6213, laut Herstellerangaben ein 1,8-trans-Polyoctenamer-Kautschuk mit einem mittleren Molekulargewicht von 1,1 • 10⁵ g/mol und einem trans/cis-Doppelbindungsverhältnis von 62:38.

Das erfindungsgemäß einzusetzende Polyalkenamer, bevorzugt das 1,8-trans-Polyoctenamer, wird gemäß der EP 0 508 056 A1 hergestellt. Die Molmasse des erfindungsgemäß bevorzugt einzusetzenden 1,8-trans-Polyoctenamers beträgt bevorzugt 90 000 bis 120 000 g/mol, besonders bevorzugt ca. 100 000 g/mol.

In einer bevorzugten Ausführungsform beträgt der Kristallinitätsanteil des erfindungsgemäß bevorzugt einzusetzenden 1,8-trans-Polyoctenamers bei Raumtemperatur 20 bis 30 %. Erfindungsgemäß insbesondere bevorzugt wird 1,8-trans-Polyoctenamer-Kautschuk mit einem mittleren Molekulargewicht von 1,0 • 10⁵ g/mol und einem trans/cis Doppelbindungsverhältnis von 80:20, also Vestenamer® 8012, eingesetzt.

Verbundteile aus steifen thermoplastischen sowie gummielastischen Formteilen werden üblicherweise durch Kleben, Verschrauben, mechanisches Verkrallen oder unter Verwendung eines Haftvermittlers zusammengefügt, da bei den weitaus meisten Kombinationen von Thermoplast und Elastomer keine ausreichend feste Haftung erzielt werden kann.

Im Stand der Technik gibt es zahlreiche Offenbarungen für einen Verbund aus Polyamid und S-vulkanisierbarem Kautschuk unter Verwendung von Haftvermittlern Der Haftvermittler wird auf die Komponente, entweder Thermoplast oder Elastomer, aufgetragen, die zuerst gefertigt wurde. Wird die Thermoplast-Komponente zuerst hergestellt, wird der Haftvermittler auf die Oberfläche des Thermoplasten aufgetragen, danach wird der Kautschuk aufgespritzt und vulkanisiert. Wird das Elastomer zuerst gefertigt, wird der Haftvermittler auf dessen Oberfläche aufgetragen, bevor der Thermoplast aufgespritzt wird. Abhängig von der Materialkombination kommt es zur Anwendung eines Ein-Schicht- oder eines Zwei-Schicht-Haftsystems. Üblicherweise und bevorzugt einzusetzende Haftvermittler sind in J. Schnetger "Lexikon der Kautschuktechnik", 3. Auflage, Hüthig Verlag Heidelberg, 2004, Seite 203, und in B. Crowther, "Handbook of Rubber Bonding", iSmithers Rapra Publishing, 2001, Seiten 3 bis 55, erwähnt. Besonders bevorzugt wird wenigstens ein Haftvermittler der "Chemlok"/"Chemosil"-Reihe (Fa. Lord) oder der "Cilbond"-Reihe (Fa. CIL) eingesetzt. Bei der Verwendung von Haftvermittlern ist prinzipiell die Verwendung von umweltschädlichen Lösungsmitteln problematisch, sofern keine wasserbasierenden Haftvermittler eingesetzt werden. Generell stellt auch der Auftrag eines Haftvermittlers einen zusätzlichen Arbeitsschritt dar, der einen zusätzlichen Arbeitsgang und somit Zeit und Aufwand erfordert.

In der EP 0 142 930 A2 wird ein Weg aufgezeigt, wie Verbundteile aus Polyamiden und EPDM-Elastomeren hergestellt werden können. Hierbei wird dem Kautschuk als Vulkanisierungsmittel ein Gemisch aus Dicumylperoxid und N,N'-m-Phenylendimaleinimid zugesetzt. Die erhaltenen Haftfestigkeiten sind jedoch für viele technische Anwendungen zu gering.

Die US-A 5132182 beschreibt, dass Polyamide mit einem Überschuss an Aminoendgruppen eine gute Haftung zu carboxylierten EPDM- oder NBR-Kautschuken aufweisen. In der US-A 5484848 wird eine andere Lösung vorgestellt, die darin besteht, dass das Kautschuk-Compound ein ungesättigtes Silan enthält. Die erzielten Haftfestigkeitswerte sind in beiden Fällen beachtlich; die Verfahren sind jedoch mit einigen Nachteilen behaftet. So kann bei der höheren Konzentration von reaktiven bzw. polaren Gruppen im Kautschuk-Compound eine unerwünschte Haftung an der bei der Vulkanisation üblicherweise verwendeten Metallform auftreten.

EP 1 273 433 A1 offenbart Verbundteile aus vulkanisiertem Kautschuk und einem thermoplastischen Harz, vor allem Polyamid (PA) PA6, PA66, PA612, PA46, wobei der vulkanisierte Kautschuk Vestenamer® 8012 enthält. Die Kautschuk-Komponente wurde entweder mit einem organischen Peroxid oder mit dem Schwefelspender Tetramethylthiuramdisulfid (Kautschukzusammensetzung R4) unter Einsatz des Coagens Trimethylolpropantrimethacrylat vulkanisiert. Im Falle des Einsatzes von Trimethylthiuramdisulfid als Vulkanisiermittel wurden mittlere Haftwerte erzielt und diese mit "B" gekennzeichnet.

EP 1 552 965 A1 beschreibt kautschukverstärkte Strukturen mit Polyamid basierten Harzzusammensetzungen und wenigstens einer Kautschuk-Komponente, die mit der Harzkomponente ohne Klebstoff verbunden ist. Allein die mit dem Schwefelspender Tetramethylthiuramdisulfid zu vernetzende Kautschuk-Komponente ist mit Vestenamer® 8012 additiviert, jedoch wird lediglich in einem Fall unter Zusatz des Vulkanisationsaktivators Trimethylolpropantrimethacrylat ein mittlerer Haftwert erzielt und dieser mit "B" gekennzeichnet. Auch in EP 1 533 344 A1 wird allein die Kautschuk-Komponente mit einem Zusatz an Vestenamer® 8012 versehen.

JP-2002-030 221 A1 offenbart den Einsatz von Polyalkenylen als Verfahrenssynergist, einzusetzen mit Polyphenylenether in der Kautschukkomponente. Ebenso erfolgt dies in JP-2003-320 618 A1.

EP 1 533 344 A1 lehrt den Einsatz u.a. von Vestenamer® 8012 im Thermoplasten, dort einem Polyamid PA612, als auch als mögliches Additiv in der nicht-vulkanisierten Kautschukkomponente um daraus Verbundteile herzustellen. EP 1533 344 A1 lehrt jedoch nur die Vulkanisation der Kautschuk-Komponente mit einem organischen Peroxid.

Die Direkthaftung von Polyamid-basierten Formteilen zu peroxidisch vernetzten Kautschuken oder Schwefel-vernetzten Kautschuken bzw. darauf basierende Verbundteile sind aus dem Stand der Technik bekannt, zeigen jedoch keine zufriedenstellenden Ergebnisse in der Verbundhaftung.

Eine Vernetzung von Kautschuken über die Schwefel-Vulkanisation ist aber für die Kautschukindustrie von außerordentlicher Bedeutung. Hierfür gibt es mehrere Gründe. Schwefelvulkanisation ist preiswerter als die Peroxid-Vernetzung und deshalb technisch viel weiter verbreitet als die Vernetzung über Peroxide. Schließlich lassen sich mit der Schwefelvulkanisation Vulkanisate erhalten, die hinsichtlich ihrer dynamischen Materialeigenschaften den Peroxid-Vulkanisaten überlegen sind.

Der gemäß der Lehre aus DE 3602705 A1 klassische 2K-Spritzgieß-Verbund aus Polyphenylenethern (PPE) enthaltenden Komponenten einerseits und Schwefel vulkanisierbaren Kautschuken, beispielsweise Styrol-Butadien-Kautschuk (SBR) andererseits, basiert auf dem Spezialfall einer thermodynamischen Verträglichkeit und kann aus diesem Grunde nicht auf Verbünde aus Polyamid (PA) einerseits und Schwefel-vulkanisierbarem Kautschuk andererseits übertragen werden.

Ausgehend von diesem Stand der Technik stellte sich die Aufgabe, ein Verfahren zur Herstellung eines festen Verbundes aus einem Teilstück aus einer Polyamidformmasse und einem Teilstück aus einem mit Schwefel zu vernetzenden Kautschuk bereitzustellen, wobei im Falle der gewaltsamen Trennung beider Teilstücke des Verbundes der Verbund selber unbeschadet bleiben soll, d.h. das Materialversagen erfolgt nicht in der Phasengrenzfläche Polyamid zu Elastomer, sondern innerhalb der Elastomer-Komponente.

Überraschend wurde gefunden, dass diese Aufgabe gelöst wird, wenn nicht die Kautschuk Komponente, sondern allein die Polyamidformmasse mit Polyalkenamer, additiviert wird und wenn nicht ein Schwefelspender, sondern elementarer Schwefel für die Vulkanisation eingesetzt wird. Darüber hinaus wurde überraschenderweise gefunden, dass bei der erfindungsgemäßen Vorgehensweise auf Haftvermittler jeglicher Art verzichtet werden kann und trotzdem hohe Haftwerte erzielt werden.

Gegenstand der Erfindung ist ein Verbundteil, das aus mindestens einem Teilstück hergestellt aus mindestens einer Polyamidformmasse und mindestens einem Teilstück hergestellt aus wenigstens einem mit elementarem Schwefel zu vulkanisierenden Kautschuk unter Verzicht auf jeglichen Haftvermittler zusammengesetzt ist, dadurch gekennzeichnet, dass die Polyamidformmasse zu mindestens 40 Gew.-%, bevorzugt zu mindestens 50 Gew.-%, besonders bevorzugt zu mindestens 60 Gew.-% und insbesondere bevorzugt zu mindestens 70 Gew.-% aus der Mischung folgender Komponenten besteht:
a) 60 bis 99,9 Gew.-Teile, bevorzugt 75 bis 99,8 Gew.-Teile und besonders bevorzugt 85 bis 99,7 Gew.-Teile und ganz besonders bevorzugt 88 bis 99,5 Gew.-Teile Polyamid sowie
b) 0,1 bis 40 Gew.-Teile, bevorzugt 0,2 bis 25 Gew.-Teile, besonders bevorzugt 0,3 bis 15 Gew.-Teile ganz besonders bevorzugt 0,5 bis 12 Gew.-Teile Polyalkenamer, bevorzugt 1,8-trans-Polyoctenamer (TOR),
   wobei die Summe der Gew.-Teile von a) und b) 100 beträgt.

Gegenstand der vorliegenden Anmeldung ist aber auch die Verwendung von Polyalkenamer, bevorzugt von TOR, zur Herabsetzung des Schmelzpunktes oder Erweichungspunktes von Polyamid.

Gegenstand der vorliegenden Erfindung ist aber auch die Verwendung der Verbundteile in flüssige Medien oder gasförmige Medien führenden Erzeugnissen, bevorzugt in der chemischen Industrie, der Haushaltsgeräteindustrie oder der Kraftfahrzeugindustrie, besonders bevorzugt als Dichtungen, Membranen, Schläuche, Gehäuse für Motoren, Pumpen und elektrisch betriebene Werkzeuge, Walzen, Reifen, Kupplungen, Anschlagpuffer, Transportbänder, Treibriemen sowie schall- oder schwingungsdämpfende Bauteile.

Die vorliegende Erfindung betrifft deshalb auch ein Verfahren zur Abdichtung von flüssige Medien oder gasförmige Medien beinhaltenden Erzeugnissen unter Einsatz wenigstens eines erfindungsgemäßen Verbundteils.

Die vorliegende Erfindung betrifft ferner ein Verfahren zur Herstellung von Verbundteilen die aus mindestens einem Teilstück hergestellt aus mindestens einer Polyamidformmasse und mindestens einem Teilstück hergestellt aus wenigstens einem mit elementarem Schwefel zu vulkanisierenden Kautschuk zusammengesetzt sind, dadurch gekennzeichnet, dass man unter Verzicht auf jeglichen Haftvermittler durch wenigstens ein Formgebungsverfahren der Reihe Extrusion, Pressverfahren, Spritzprägeverfahren, Transferpressverfahren, Transferspritzpressverfahren oder Spritzgießen oder dessen Sonderverfahren, insbesondere Gas-Injektionstechnik, bevorzugt durch 2-Komponenten-Spritzgießen, entweder das Teilstück aus der Polyamidformmasse mit einem elementaren Schwefel enthaltenden Kautschuk-Compound beaufschlagt und den Vulkanisationsbedingungen des Kautschuks aussetzt oder das Teilstück aus mit elementarem Schwefel vernetztem Kautschuk mit einer Polyamidformmasse beaufschlagt und in beiden Fällen die Polyamidformmasse zu mindestens 40 Gew.-%, bevorzugt zu mindestens 50 Gew.-%, besonders bevorzugt zu mindestens 60 Gew.-% und insbesondere bevorzugt zu mindestens 70 Gew.-% aus der Mischung folgender Komponenten besteht:
a) 60 bis 99,9 Gew.-Teile, bevorzugt 75 bis 99,8 Gew.-Teile und besonders bevorzugt 85 bis 99,7 Gew.-Teile und ganz besonders bevorzugt 88 bis 99,5 Gew.-Teile Polyamid sowie
b) 0,1 bis 40 Gew.-Teile, bevorzugt 0,2 bis 25 Gew.-Teile, besonders bevorzugt 0,3 bis 15 Gew.-Teile, ganz besonders bevorzugt 0,5 bis 12 Gew.-Teile Polyalkenamer, bevorzugt 1,8-trans-Polyoctenamer (TOR),
wobei die Summe der Gew.-Teile von a) und b) 100 beträgt.

Die vorliegende Erfindung betrifft zudem ein Verbundteil, das aus mindestens einem Teilstück hergestellt aus mindestens einer Polyamidformmasse und mindestens einem Teilstück hergestellt aus wenigstens einem mit elementarem Schwefel zu vulkanisierenden Kautschuk zusammengesetzt ist, erhältlich unter Verzicht auf jeglichen Haftvermittler durch wenigstens ein Formgebungsverfahren der Reihe Extrusion, Pressverfahren, Spritzprägeverfahren, Transferpressverfahren, Transferspritzpressverfahren oder Spritzgießen oder dessen Sonderverfahren, insbesondere Gas-Injektionstechnik, bevorzugt durch 2-Komponenten-Spritzgießen, indem man das Teilstück aus der Polyamidformmasse mit einem elementaren Schwefel enthaltenden Kautschuk-Compound beaufschlagt und den Vulkanisationsbedingungen des Kautschuks aussetzt oder indem man das Teilstück aus mit Schwefel vernetztem Kautschuk mit einer Polyamidformmasse beaufschlagt und in beiden Fällen die Polyamidformmasse zu mindestens 40 Gew.-%, bevorzugt zu mindestens 50 Gew.-%, besonders bevorzugt zu mindestens 60 Gew.-% und insbesondere bevorzugt zu mindestens 70 Gew.-% aus der Mischung folgender Komponenten besteht:
a) 60 bis 99,9 Gew.-Teile, bevorzugt 75 bis 99,8 Gew.-Teile und besonders bevorzugt 85 bis 99,7 Gew.-Teile und ganz besonders bevorzugt 88 bis 99,5 Gew.-Teile Polyamid sowie
b) 0,1 bis 40 Gew.-Teile, bevorzugt 0,2 bis 25 Gew.-Teile, besonders bevorzugt 0,3 bis 15 Gew.-Teile, ganz besonders bevorzugt 0,5 bis 12 Gew.-Teile Polyalkenamer, bevorzugt 1,8-trans-Polyoctenamer (TOR),
wobei die Summe der Gew.-Teile von a) und b) 100 beträgt.

Zur Klarstellung sei angemerkt, dass vom Rahmen der vorliegenden Erfindung alle im Rahmen dieser Offenbarung aufgeführten, allgemeinen oder in Vorzugsbereichen genannten Definitionen und Parameter in beliebigen Kombinationen umfasst sind. Sofern nicht anders angegeben sind alle Prozentangaben Gewichtsprozente.

Vulkanisierte Kautschuke sind Elastomere, die durch einen Vulkanisationsprozess erhältlich sind. Unter Vulkanisation versteht man ein von Charles Goodyear entwickeltes chemisch-technisches Verfahren, bei dem Kautschuk unter Einfluss von Zeit, Temperatur, Druck und mittels geeigneter Vernetzungschemikalien gegen atmosphärische und chemische Einflüsse sowie gegen mechanische Beanspruchung widerstandsfähig gemacht wird.

Gemäß dem Stand der Technik werden zur Schwefel Vulkanisation eine Kautschukmischung, bestehend aus Rohkautschuk, Schwefel in Form von löslichem und in Form von unlöslichem Schwefel oder Schwefel spendenden Stoffen, hierzu gehören beispielsweise die in der Gummiindustrie als Schwefelspender allgemein bekannten organischen Additive, sowie insbesondere Dischwefeldichlorid (S₂Cl₂), Katalysatoren, Hilfsstoffen und gegebenenfalls weiteren Füllstoffen erhitzt. Als Additiv kann der Kautschuk Komponente wenigstens ein Vulkanisationsbeschleuniger beigefügt werden, der für die Schwefelvulkanisation geeignet ist.

Im Stand der Technik unterscheidet man fünf Schwefel basierte Vernetzungssysteme, die sich in der Menge des zugesetzten Schwefels bzw. Schwefelspenders und im Verhältnis von Schwefel bzw. Schwefelspender zu Vulkanisationsbeschleuniger unterscheiden.

Das sogenannte "konventionelle" Schwefelvernetzungssystem enthält 2,0 bis 3,5 phr Schwefel (phr = parts per hundred of rubber, d.h. Gew.-Teile bezogen auf 100 Gew.-Teile Kautschuk) und 0,5 bis 1,0 phr Beschleuniger. Beim sogenannten "Semi-EV" Vernetzungssystem (EV = efficient vulcanization) werden 1,0 bis 2,0 phr Schwefel und 1,0 bis 2,5 phr Beschleuniger eingesetzt. Das sogenannte "EV" Vernetzungssystem enthält 0,3 bis 1,0 phr Schwefel und 2,0 bis 6,0 phr Beschleuniger. Setzt man 0,3 bis 0,6 phr Schwefel, 3,0 bis 6,0 phr Beschleuniger und 0,0 bis 2,0 phr Schwefelspender ein, spricht man vom sogenannten "EV-schwefelarmen" Vernetzungssystem. Im fünften, nicht erfindungsgemäßen Schwefel basierten Vernetzungssystem enthält das sogenannte "Schwefelspender-Vernetzungssystem" keinen elementaren Schwefel (0,0 phr), sondern es werden 0,0 bis 2,0 phr Beschleuniger und 1,0 bis 4,0 phr Schwefelspender eingesetzt. Die Schwefelspender, die im "Schwefelspender-Vernetzungssystem" verwendet werden, wirken als Vulkanisiermittel (F. Röthemeyer, F. Sommer "Kautschuktechnologie", 2. Überarbeitete Auflage, Carl Hanser Verlag München Wien, 2006, Seite 291 bis 295). Die vorliegende Erfindung wird aufgrund der zwingenden Anwesenheit von Schwefel als Vernetzer in der Kautschuk Komponente bevorzugt mittels wenigstens eines Schwefelvernetzungssystems der Reihe konventionelles Schwefelvernetzungssystem, semi-EV-Vernetzungssystem, EV-Vernetzungssystem oder EV-schwefelarmes Vernetzungssystem durchgeführt.

In allen Fällen kann das Vernetzungssystem neben den sogenannten Hauptbeschleunigern unterschiedliche und gegebenenfalls auch mehrere sogenannte Zweitbeschleuniger enthalten. Deren Art, Dosierung und Kombination wird auf den jeweiligen Anwendungsfall abgestimmt und ist zusätzlich je Kautschuktyp verschieden. Beim Vulkanisationsprozess mit Schwefel werden die langkettigen Kautschukmoleküle durch Schwefelbrücken vernetzt. Hierdurch gehen die plastischen Eigenschaften des Kautschuks bzw. der Kautschukmischung verloren, der Stoff wird mittels des Verfahrens der Vulkanisation vom plastischen in einen elastischen Zustand überführt.

Das bei diesem Verfahren entstehende Elastomer, auch als Gummi bezeichnet, hat gegenüber dem Edukt dauerelastische Eigenschaften, kehrt bei mechanischer Beanspruchung jeweils wieder in seine Ursprungslage zurück, hat eine höhere Reißfestigkeit, Dehnung und Beständigkeit gegenüber Alterung und Witterungseinflüssen.

Die Elastizität eines Schwefel vernetzten Gummiwerkstoffs ist abhängig von der Anzahl der Schwefelbrücken. Je mehr Schwefelbrücken vorhanden sind, desto härter ist der Gummi. Die Anzahl und die Länge der Schwefelbrücken ist wiederum abhängig von der zugesetzten Schwefelmenge, der Art des Vernetzungssystems und der Dauer der Vulkanisation.

Die erfindungsgemäß einzusetzende mit elementarem Schwefel zu vernetzende Kautschuk Komponente zeichnet sich durch die Gegenwart von C=C-Doppelbindungen aus.

Bei diesen C=C doppelbindungshaltigen Kautschuken handelt es sich bevorzugt um solche auf Basis von Dienen. Erfindungsgemäß besonders bevorzugt sind doppelbindungshaltige Kautschuke, die aus der technischen Herstellung kommend einen Gelanteil von kleiner 30%, bevorzugt kleiner 5%, insbesondere kleiner 3% aufweisen, und nach DIN/ISO 1629 als "R"-bzw. als "M" Kautschuke bezeichnet werden. Gelanteil im Sinne der vorliegenden Erfindung bedeutet den Anteil an nicht mehr löslichem, aber quellbaren dreidimensional vernetztem polymeren Material.

Erfindungsgemäß bevorzugte, mit elementarem Schwefel zu vernetzende Kautschuke sind solche der Reihe Naturkautschuk (NR), Ethylen-Propylen-Dien Kautschuke (EPDM), Styrol/Diolefin-Kautschuke, bevorzugt Styrol/Butadienkautschuk (SBR), insbesondere E-SBR, Polybutadienkautschuk (BR), Polyisopren (IR), Styrol/Isopren-Kautschuk (SIBR), Butadien/Isopren-Kautschuk (BIR), Butylkautschuk, insbesondere Isobuten/Isopren-Kautschuk (IIR), Halobutylkautschuk, insbesondere Chlor- oder Brombutylkautschuk (XIIR), Nitrilkautschuk (NBR), hydrierter Nitrilkautschuk (H-NBR), carboxylierter Butadien/Acrylnitril-Kautschuk (XNBR), Styrol/Butadien/Acrylnitril-Kautschuk (SNBR), carboxylierter Styrol/Butadien-Kautschuk (XSBR), Polychloropren (CR) oder epoxydierter Naturkautschuk (ENR). Wenn die Möglichkeit besteht, Kautschuke aus mehreren Synthesewegen zu erhalten, wie beispielsweise aus Emulsion oder aus Lösung, sind immer alle Möglichkeiten gemeint.

Ferner können auch Mischungen von zwei oder mehr der zuvor genannten Kautschuke eingesetzt werden.

Erfindungsgemäß besonders bevorzugt wird wenigstens ein mit elementarem Schwefel zu vernetzender Kautschuk der Reihe NR (Naturkautschuk), SBR (Vinylaromat/Dien-Kautschuke), BR (Polybutadienkautschuk), IR (Polyisopren), EPDM (Ethylen-Propylen-Dien-Kautschuk), NBR (Nitrilkautschuk), hydrierter Nitrilkautschuk (H-NBR), carboxylierter Butadien/Acrylnitril-Kautschuk (XNBR), Butylkautschuk (IIR), Halobutylkautschuk (XIIR), Polychloropren (CR) oder Mischungen daraus eingesetzt.

Erfindungsgemäß insbesondere bevorzugt wird wenigstens mit elementarem Schwefel zu vernetzender Naturkautschuk (NR) eingesetzt.

Die vorgenannten Kautschuke sind dem Fachmann hinreichend bekannt und von unterschiedlichsten Anbietern käuflich erhältlich.

Der erfindungsgemäß insbesondere bevorzugte mit elementarem Schwefel zu vernetzende Naturkautschuk (NR) ist chemisch ein Polyisopren mit einem cis-1,4-Gehalt von > 99% bei mittleren Molekulargewichten von 2·10⁶ bis 3·10⁷ g/mol. NR wird auf biochemischen Weg synthetisiert, bevorzugt in der Plantagenpflanze Hevea Brasiliensis. Kommerziell erhältlich sind Naturkautschuke z.B. als Produkte aus der Produktreihe SMR (Standard Malaysian Rubber) von Pacidunia Sdn. Bhd. oder aus der Produktreihe SVR (Standard Vietnamese Rubber) von Phu An Imexco. Ltd. (J. Schnetger "Lexikon der Kautschuktechnik" 3. Auflage, Hüthig Verlag Heidelberg, 2004, Seite 331 bis 338).

Als mit elementarem Schwefel zu vernetzender Kautschuk wird in einer alternativ bevorzugten Ausführungsform EPDM Kautschuk eingesetzt. Bei EPDM handelt es sich um Polymere, die durch Terpolymerisation von Ethylen und größeren Anteilen Propylen sowie einigen Gew.-% eines dritten Monomeren mit Dien-Struktur hergestellt werden. Das Dien-Monomer stellt dabei die Doppelbindungen für die sich anschließende Vulkanisation bereit. Als Dien-Monomere finden vorwiegend cis,cis-1,5-Cyclooctadien (COD), exo-Dicyclopentadien (DCP), endo-Dicyclopentadien (EDCP), 1,4-Hexadien (HX), 5-Ethyliden-2-norbornen (ENB) und auch Vinylnorbornen (VNB) Verwendung.

EPDM-Kautschuk wird in bekannter Weise durch Polymerisation eines Gemisches aus Ethen und Propen sowie einem Dien in Gegenwart von Ziegler-Natta-Katalysator-Systemen, wie z.B. Vanadiumverbindungen mit Organoaluminium-Cokatalysatoren, oder Metallocen-Katalysator-Systemen hergestellt (J. Schnetger "Lexikon der Kautschuktechnik" 3. Auflage, Hüthig Verlag Heidelberg, 2004, Seite 144 bis 146). In der Regel wird ein Gemisch aus mehr als 25 Gew.-% Ethen, mehr als 25 Gew.-% Propen und 1 bis 10 Gew.-%, vorzugsweise 1 bis 3 Gew.-% eines nicht konjugierten Diens wie Bicyclo-(2.2.1)-heptadien, 1,5-Hexadien, 1,4-Dicyclopentadien, 5-Ethylidennorbornen und auch Vinylnorbornen (VNB) polymerisiert.

EPDM Kautschuke sind beispielsweise als Produkte aus der Produktreihe der Marke Keltan® von der Lanxess Deutschland GmbH erhältlich, oder aber auch nach den für den Fachmann geläufigen Methoden herstellbar.

Als mit elementarem Schwefel zu vernetzender Kautschuk wird in einer alternativen bevorzugten Ausführungsform SBR (Vinylaromat/Dien-Kautschuk) eingesetzt. Unter SBR-Kautschuken werden Kautschuke auf Basis von Vinylaromaten und Dienen verstanden und zwar sowohl Lösungs-SBR-Kautschuke, abgekürzt als "L-SBR", als auch Emulsions-SBR-Kautschuke, abgekürzt als E-SBR.

Unter L-SBR versteht man Kautschuke, die in einem Lösungsprozess auf der Basis von Vinylaromaten und Dienen, bevorzugt konjugierten Dienen hergestellt werden (H. L. Hsieh, R. P. Quirk, Marcel Dekker Inc. New York-Basel 1996; I. Franta Elastomers and Rubber Compounding Materials; Elsevier 1989, Seite 73-74, 92-94; Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 240-364). Geeignete vinylaromatische Monomere sind Styrol, o-, m- und p- Methylstyrol, technische Methylstyrolgemische, p-tert.-Butylstyrol, α-Methylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat liegt bevorzugt im Bereich von 5 bis 50 Gew.-%, besonders bevorzugt im Bereich von 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien. Bevorzugt sind 1,3-Butadien und Isopren. Der Gehalt an einpolymerisierten Dienen liegt im Bereich von 50 bis 95 Gew.-%, bevorzugt im Bereich von 60 bis 90 Gew.-%. Der Gehalt an Vinylgruppen im einpolymerisierten Dien liegt im Bereich von 10 bis 90 Gew.-%, der Gehalt an 1,4-trans-ständigen Doppelbindungen liegt im Bereich von 20 bis Gew.-80 % und der Gehalt an 1,4-cis-ständigen Doppelbindungen ist komplementär zur Summe aus Vinylgruppen und 1,4-trans-ständigen Doppelbindungen. Der Vinylgehalt des L-SBR beträgt vorzugsweise > 20 Gew.-%.

Üblicherweise sind die polymerisierten Monomeren und die unterschiedlichen Dien-Konfigurationen statistisch im Polymeren verteilt. Auch Kautschuke mit blockartig aufgebauter Struktur, die als Integralkautschuk bezeichnet werden, sollen unter die Definition von L-SBR (A) fallen (K.-H. Nordsiek, K.-H. Kiepert, GAK Kautschuk Gummi Kunststoffe 33 (1980), no. 4, 251-255).

Unter L-SBR sollen sowohl lineare als auch verzweigte oder endgruppenmodifizierte Kautschuke verstanden werden. Beispielsweise sind derartige Typen in DE 2 034 989 A1 genannt. Als Verzweigungsmittel wird bevorzugt Siliciumtetrachlorid bzw. Zinntetrachlorid eingesetzt.

Die Herstellung dieser Vinylaromat/Dien-Kautschuke erfolgt insbesondere durch anionische Lösungspolymerisation, d. h. mittels eines Katalysators auf Alkali- oder Erdalkalimetallbasis in einem organischen Lösungsmittel.

Die in Lösung polymerisierten Vinylaromat/Dien-Kautschuke besitzen vorteilhafterweise Mooney-Viskositäten (ML 1+4 at 100°C) im Bereich von 20 bis 150 Mooneyeinheiten, vorzugsweise im Bereich von 30 bis 100 Mooneyeinheiten. Ölfreie L-SBR-Kautschuke weisen Glastemperaturen im Bereich von -80 °C bis +20 °C auf, bestimmt durch Differentialthermoanalyse (DSC).

Unter E-SBR versteht man Kautschuke, die in einem Emulsionsprozess auf der Basis von Vinylaromaten und Dienen, bevorzugt konjugierten Dienen, und gegebenenfalls weiteren Monomeren hergestellt werden (Ullmann's Encyclopedia of Industrial Chemistry, Vol A 23, Rubber 3. Synthetic, VCH Verlagsgesellschaft mbH, D-69451 Weinheim, 1993, S. 247-251). Vinylaromaten sind Styrol, p-Methylstyrol und alpha-Methylstyrol. Diene sind insbesondere Butadien und Isopren. Weitere Monomere sind insbesondere Acrylnitril. Der Gehalt an einpolymerisiertem Vinylaromat liegen im Bereich von 10 bis 60 Gew.-%. Die Glastemperatur liegt üblicherweise im Bereich von -50 °C bis +20 °C (bestimmt mittels DSC) und die Mooney-Viskositäten (ML 1+4 at 100°C) liegen im Bereich von 20 bis 150 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien E-SBR-Kautschuke weisen Glastemperaturen von -70 °C bis +20 ° C auf, bestimmt durch Differentialthermoanalyse (DSC).

Sowohl E-SBR als auch S-SBR können in den erfindungsgemäßen Kautschukkomponenten auch in ölversteckter Form eingesetzt werden. Ölversteckt im Sinne der vorliegenden Erfindung bedeutet, das Öle im Herstellprozess in den Kautschuk eingemischt werden. Die Öle dienen als Weichmacher. Anwendung finden dabei dem Fachmann bekannte und industrieübliche Öle. Bevorzugt sind solche, die wenig bis keine polyaromatischen Kohlenwasserstoffe enthalten. Geeignet sind TDAE (Treated Distillate Aromatic Extract), MES (Mild Extraction Solvate) und naphthenische Öle.

Als mit elementarem Schwefel zu vernetzender Kautschuk wird in einer alternativen bevorzugten Ausführungsform Polybutadien (BR) eingesetzt. Polybutadien (BR) umfasst insbesondere zwei unterschiedliche Polybutadien-Typklassen. Die erste Klasse weist einen 1,4-cis-Gehalt von mindestens 90 % auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd- eingesetzt (Houben-Weyl, Methoden der Organischen Chemie, Thieme Verlag, Stuttgart, 1987, Band E 20, Seiten 798 bis 812; Ullmann's Encyclopedia of Industrial Chemistry, Vol A 23, Rubber 3. Synthetic, VCH Verlagsgesellschaft mbH, D-69451 Weinheim, 1993, S. 239-364). Die Glastemperatur dieser Polybutadiene liegt bevorzugt bei ≤ -90°C (bestimmt mittels DSC). Die zweite Polybutadien-Typklasse wird mit Li-Katalysatoren hergestellt und weist Vinylgehalte von 10% bis 80% auf. Die Glastemperaturen dieser Polybutadien-Kautschuke liegen im Bereich von -90 °C bis +20 °C (bestimmt mittels DSC).

Als mit elementarem Schwefel zu vernetzender Kautschuk wird in einer alternativen bevorzugten Ausführungsform Polyisopren (IR) eingesetzt. Polyisopren (IR) hat typischerweise einen 1,4-cis-Gehalt von mindestens 70%. Unter den Begriff IR fallen sowohl synthetisch hergestelltes 1,4-cis-Polyisopren als auch Naturkautschuk, (NR). Synthetisch wird IR sowohl mittels Lithium- als auch mit Hilfe von Ziegler/Natta-Katalysatoren hergestellt, vorzugsweise mit Titan- und Neodymkatalysatoren (Houben-Weyl, Methoden der Organischen Chemie, Thieme Verlag, Stuttgart, 1987, Band E 20, Seiten 822 bis 840; Ullmann's Encyclopedia of Industrial Chemistry, Vol. A 23, Rubber 3. Synthetic, VCH Verlagsgesellschaft mbH, D-69451 Weinheim, 1993, S. 239-364). Vorzugsweise wird Naturkautschuk eingesetzt.

Auch 3,4-Polyisopren, das Glastemperaturen im Bereich von -20 bis +30 °C aufweist, fällt unter IR.

Als mit elementarem Schwefel zu vernetzender Kautschuk wird in einer alternativen bevorzugten Ausführungsform Nitrilkautschuk (NBR) eingesetzt. NBR wird durch Copolymerisation von Acrylnitril und Butadien in Masseverhältnissen von ca. 51 : 48 bis 82 : 18 gewonnen. Seine Herstellung erfolgt praktisch ausschließlich in wässriger Emulsion. Die dabei resultierenden Emulsionen werden für den Einsatz im Rahmen dieser Erfindung zum Festkautschuk aufgearbeitet (J. Schnetger "Lexikon der Kautschuktechnik" 3. Auflage, Hüthig Verlag Heidelberg, 2004, Seite 28-29).

Als mit elementarem Schwefel zu vernetzender Kautschuk wird in einer alternativen bevorzugten Ausführungsform hydrierter Nitrilkautschuk (H-NBR) eingesetzt. H-NBR wird über vollständige oder partielle Hydrierung von NBR in nicht-wässriger Lösung unter Einsatz spezieller Katalysatoren (z.B. Pydridin-Cobalt-Komplexe oder Rhodium-, Rhutenium-, Iridium- oder Palladium-Komplexe) hergestellt (J. Schnetger "Lexikon der Kautschuktechnik" 3. Auflage, Hüthig Verlag Heidelberg, 2004, Seite 30).

Als mit elementarem Schwefel zu vernetzender Kautschuk wird in einer alternativen bevorzugten Ausführungsform carboxylierter Butadien/Acrylnitril-Kautschuk (XNBR) eingesetzt. XNBR wird über Terpolymerisation von Butadien, Acrylnitril und Acrylsäure bzw. Methacrylsäure hergestellt. Der Anteil der Carbonsäure liegt zwischen 1 und 7 Gew.-% (F. Röthemeyer, F. Sommer "Kautschuktechnologie", 2. überarbeitete Auflage, Carl Hanser Verlag München Wien, 2006, Seite 112).

Als mit elementarem Schwefel zu vernetzender Kautschuk wird in einer alternativen bevorzugten Ausführungsform Butylkautschuk (IIR), insbesondere Isobuten/Isopren-Kautschuk, eingesetzt. Butylkautschuk wird über eine Copolymerisation aus Isorpren und Isobutylen hergestellt (J. Schnetger "Lexikon der Kautschuktechnik" 3. Auflage, Hüthig Verlag Heidelberg, 2004, Seite 69 bis 71).

Als mit elementarem Schwefel zu vernetzender Kautschuk wird in einer alternativen bevorzugten Ausführungsform Halobutylkautschuk (XIIR), insbesondere Chlor- (CIIR) oder Brombutylkautschuk (BIIR), eingesetzt. Chlorbutylkautschuk (CIIR) wird durch Einleiten von Chlorgas in eine Butylkautschuklösung hergestellt (J. Schnetger "Lexikon der Kautschuktechnik" 3. Auflage, Hüthig Verlag Heidelberg, 2004, Seite 75). Brombutylkautschuk (BIIR) wird durch Behandlung von Butylkautschuk in Lösung mit Brom hergestellt (J. Schnetger "Lexikon der Kautschuktechnik" 3. Auflage, Hüthig Verlag Heidelberg, 2004, Seite 66 bis 67).

Als mit elementarem Schwefel zu vernetzender Kautschuk wird in einer alternativen bevorzugten Ausführungsform Polychloropren (CR) eingesetzt. Polychloropren wird aus Chloropren, 2-Chlor-1,3-butadien, gegebenenfalls in Anwesenheit von Dichlorbutadien oder Schwefel als Comonomere, in einer Emulsionspolymerisation hergestellt. Durch Verwendung spezieller Regler wie Mercaptane, z.B. n-Dodecylmercaptan, oder Xanthogendisulfid während der Polymerisation können sogenannte Mercaptan-CR-Typen bzw. Xanthogendisulfid-CR-Typen hergestellt werden, die mit Metalloxiden, Vulkanisationsbeschleunigern und Schwefel vernetzt werden können. Hierbei können spezielle Beschleunigersysteme, insbesondere Thioharnstoffe (ETU, DBTU, TBTU, DETU, MTT) eingesetzt werden (J. Schnetger "Lexikon der Kautschuktechnik" 3. Auflage, Hüthig Verlag Heidelberg, 2004, Seite 78 bis 81; F. Röthemeyer, F. Sommer "Kautschuktechnologie", 2. überarbeitete Auflage, Carl Hanser Verlag München Wien, 2006, Seite 15 bis 163).

Die Kautschuke können in unfunktionalisierter Form vorliegen. In einzelnen Fällen kann die Verbundhaftung weiter verbessert werden, wenn der Kautschuk funktionalisiert wird, insbesondere durch Einbringen von Hydroxylgruppen, Carboxylgruppen oder Säureanhydridgruppen.

Erfindungsgemäß wird der Kautschuk Komponente als Vernetzer/Vulkanisator elementarer Schwefel beigefügt. Dieser wird entweder als löslicher oder unlöslicher Schwefel, bevorzugt als löslicher Schwefel, eingesetzt.

Unter löslichem Schwefel versteht man die bei gewöhnlichen Temperaturen einzige stabile Form, den gelben Cyclooctaschwefel, auch als S₈-Schwefel oder α-Schwefel bezeichnet, die aus typischen rhombischen Kristallen besteht und in Schwefelkohlenstoff hoch löslich ist. So lösen sich bei 25 °C in 100 g CS₂ 30 g α-S (Stichwort "Schwefel" des Online Römpp Chemie Lexikons, Stand August 2004, Georg Thieme Verlag Stuttgart).

Unter unlöslichem Schwefel versteht man eine Schwefelmodifikation, die nicht zum sogenannten Ausblühen an der Oberfläche von Kautschukmischungen neigt. Diese spezielle Schwefelmodifikation ist zu 60 - 95 % in Schwefelkohlenstoff unlöslich.

In einer alternativen bevorzugten Ausführungsform wird zusätzlich zum elementaren Schwefel wenigstens ein sogenannter Schwefelspender in der Kautschuk Komponente eingesetzt. Diese zusätzlich einzusetzenden Schwefelspender können über eine Beschleunigerwirkung verfügen oder nicht. Bevorzugt einzusetzende Schwefelspender ohne Beschleunigerwirkung sind Dithiomorpholin (DTDM) oder Caprolactamdisulfid (CLD). Bevorzugt einzusetzende Schwefelspender mit Beschleunigerwirkung sind 2-(4-Morpholinodithio)benzothiazol (MBSS), Tetramethylthiuramdisulfid (TMTD), Tetraethylthiuramdisulfid (TETD) oder Dipentamethylenthiuramtetrasulfid (DPTT) (J. Schnetger "Lexikon der Kautschuktechnik" 3. Auflage, Hüthig Verlag Heidelberg, 2004, Seite 472 oder F. Röthemeyer, F. Sommer "Kautschuktechnologie", 2. überarbeitete Auflage, Carl Hanser Verlag München Wien, 2006, Seite 309 bis 310).

Elementarer Schwefel und in bevorzugten Ausführungsformen gegebenenfalls zusätzlich einzusetzender Schwefelspender werden in der erfindungsgemäß einzusetzenden Kautschukmischung bevorzugt in einer Gesamtmenge im Bereich von 0,1 bis 15 Gew.-Teilen, besonders bevorzugt 0,1-10 Gew.-Teilen, bezogen auf 100 Gew.-Teile der Kautschuk Komponente eingesetzt.

Werden zwei oder mehr Kautschuke als Kautschuk Komponente eingesetzt, so dient die Summe aller Kautschuke als Basis für die vorgenannten Angaben in Gew.-Teilen. Dies gilt im Folgenden auch für alle anderen Mengenangaben für die übrigen Komponenten einer erfindungsgemäß einzusetzenden Kautschuk Komponente zur Herstellung eines erfindungsgemäßen Verbundteils.

In einer erfindungsgemäß bevorzugten Ausführungsform kann der Kautschuk Komponente als Additiv wenigstens ein Vulkanisationsbeschleuniger beigefügt werden, der für die Schwefelvulkanisation mit elementarem Schwefel geeignet ist. Entsprechende Vulkanisationsbeschleuniger sind in J. Schnetger "Lexikon der Kautschuktechnik" 3. Auflage, Hüthig Verlag Heidelberg, 2004, Seiten 514-515, 537-539 und 586-589 erwähnt.

Erfindungsgemäß bevorzugt einzusetzende Vulkanisationsbeschleuniger sind Xanthogenate, Dithiocarbamate, Tetramethylthiuramdisulfide, Thiurame, Thiazole, Thioharnstoff-Derivate, Amin-Derivate wie Tetramine, Sulfenimide, Piperazine, Amincarbamate, Sulfenamide, Dithiophosphorsäure-Derivate, Bisphenol- oder Triazin-Derivate.

Erfindungsgemäß besonders bevorzugte Vulkanisationsbeschleuniger sind Benzothiazyl-2-cyclohexyl-sulfenamid (CBS), Benzothiazyl-2-tert.-butylsulfenamid (TBBS), Benzo-thiazyl-2-dicyclohexylsulfenamid (DCBS), 1,3-Diethylthioharnstoff (DETU), 2-Mercaptobenzothiazol (MBT) und dessen Zinksalze (ZMBT), Kupfer-dimethyldithiocarbamat (CDMC), Benzothiazyl-2-sulfenmorpholid (MBS), Benzothiazyldicyclohexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Tetramethylthiorammonosulfid (TMTM), Dipentamethylenthiuramtetrasulfid (DPTT), Tetra-iso-butylthiuramdisulfid (IBTD), Tetraethylthiuramdisulfid (TETD), Tetramethylthiuramdisulfid (TMTD), Zink-N-dimethyl-dithiocarbamat (ZDMC), Zink-N-diethyldithiocarbamat (ZDEC), Zink-N-dibutyl-dithiocarbamat (ZDBC), Zink-N-ethylphenyl-dithiocarbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylen-thioharnstoff (ETU), Diphenylthioharnstoff (DPTU), Triethyltrimethyltriamin (TTT); N-t-Butyl-2-benzothiazol-sulfenimid (TBSI); 1,1'-Dithiobis(4-methylpiperazin); Hexamethylendiamincarbamat (HMDAC); Benzothiazyl-2tert.-butylsulfenamid (TOBS), N,N'-Diethylthiocarbamyl-N'-cyclohexylsulfenamid (DETCS), N-Oxidiethylen-dithiocarbamyl-N'-oxydiethylensulfenamid (OTOS), 4,4'-Dihydroxydiphenylsulfon (Bisphenol S), Zn-isopropylxanthogenat (ZIX), Selen-, Tellur-, Blei, Kupfer- und Erdalkalisalze von Dithiocarbaminsäuren; Pentamethylenammonium-N-pentamethylendithiocarbamat; Dithiophosphorsäurederivate; Cyclohexylethylamin; Dibutylamin; Polyethylenpolyamine oder Polyethylenpolyimine wie z.B. Triethylentetramin (TETA).

Die Vulkanisationsbeschleuniger werden bevorzugt in einer Menge im Bereich von 0,1 bis 15 Gew.-Teilen, bevorzugt 0,1-10 Gew.-Teilen, bezogen auf 100 Gew.-Teile der Kautschuk Komponente eingesetzt.

In einer erfindungsgemäß bevorzugten Ausführungsform wird der Kautschuk Komponente als Additiv Zinkoxid und Stearinsäure oder Zinkstearat beigefügt. Der Einsatz des Zinkoxids erfolgt als Aktivator für die Schwefelvulkanisation. Die Auswahl einer geeigneten Menge ist dem Fachmann ohne großen Aufwand möglich. Wird das Zinkoxid in einer etwas höheren Dosierung eingesetzt, so führt dies zu einer vermehrten Ausbildung monosulfidischer Bindungen und damit zu einer verbesserten Alterungsbeständigkeit der Kautschuk Komponente. Im Falle des Einsatzes von Zinkoxid enthält die erfindungsgemäße Kautschuk Komponente ferner Stearinsäure (Octadecansäure). Diese ist dem Fachmann dafür bekannt, dass sie in der Kautschuktechnologie ein breites Wirkungsspektrum besitzt. So besteht eine ihrer Wirkungen darin, dass sie zu einer verbesserten Dispersion der Vulkanisationsbeschleuniger in der Kautschuk Komponente führt. Ferner kommt es zu einer Komplexbildung mit Zinkionen im Rahmen der Schwefelvulkanisation.

Bevorzugt wird Zinkoxid in der erfindungsgemäß einzusetzenden Kautschuk Komponente in einer Menge von 0,5 bis 15 Gew.-Teilen, bevorzugt 1 bis 7,5 Gew.-Teilen, besonders bevorzugt 1 bis 5 Gew.-Teilen bezogen auf 100 Gew.-Teile der Kautschuk Komponente eingesetzt.

Bevorzugt wird Stearinsäure in der erfindungsgemäß einzusetzenden Kautschuk Komponente in einer Menge von 0,1 bis 7, bevorzugt 0,25 bis 7 Gew.-Teilen, bevorzugt 0,5 bis 5 Gew.-Teilen, bezogen auf 100 Gew.-Teile der Kautschuk Komponente eingesetzt.

Alternativ oder aber auch zusätzlich zur Kombination aus Zinkoxid und Stearinsäure kann in einer bevorzugten Ausführungsform Zinkstearat eingesetzt werden. In diesem Fall wird üblicherweise eine Menge von 0,25 bis 5 Gew.-Teilen, bevorzugt 1 bis 3 Gew.-Teilen, jeweils bezogen auf 100 Gew.-Teile der Kautschuk Komponente eingesetzt.

In einer alternativen bevorzugten Ausführungsform kann neben elementarem Schwefel die Vernetzung auch als gemischte Schwefel-Peroxid-Vernetzung durchgeführt werden.

Darüber hinaus enthält die Kautschuk Komponente in einer bevorzugten Ausführungsform wenigstens eine weitere Komponente der Reihe Füllstoffe, Mastiziermittel, Weichmacher, Verarbeitungswirkstoffe, Alterungs-, UV- oder Ozonschutzmittel, Klebrigmacher, Pigmente oder Farbstoffe, Treibmittel, Flammschutzmittel, Formtrennmittel, Festigkeitsträger oder Haftungssysteme.

Im Falle des Einsatzes von Füllstoffen in der Kautschuk Komponente wird bevorzugt wenigstens ein Füllstoff der Reihe Kieselsäure, Ruß, Silikate, Oxide oder organische Füllstoffe eingesetzt.

Kieselsäure oder "Silica" (Ullmann's Encyclopedia of Industrial Chemistry, VCH Verlagsgesellschaft mbH, D-69451 Weinheim, 1993, "Silica", S.635-645), wird insbesondere als pyrogene Kieselsäure (ibid. S. 635-642) oder als gefällte Kieselsäure (ibid. 642-645) eingesetzt, wobei erfindungsgemäß die gefällte Kieselsäure bevorzugt wird. Die gefällten Kieselsäuren haben eine spezifische Oberfläche von 5 bis 1000 m²/g bestimmt nach BET, vorzugsweise eine spezifische Oberfläche von 20 bis 400 m²/g. Sie werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al-, Mg-, Ca-, Ba-, Zn-, Zr-, Ti-Oxiden vorliegen. Erfindungsgemäß bevorzugt werden Kieselsäuren mit spezifischen Oberflächen von 5 bis 1000 m²/g, bevorzugter 20 bis 400 m²/g, jeweils bestimmt nach BET, eingesetzt.

Gegebenenfalls als Füllstoffe in der Kautschuk Komponente einzusetzende Ruße sind dem Fachmann ebenfalls bekannt (siehe Stichworte "carbon" bzw. "carbon black" in Ullmann's Encyclopedia of Industrial Chemistry, VCH Verlagsgesellschaft mbH, D-69451 Weinheim, 1993, vol A 5 S.95-158). Sie werden bevorzugt nach dem gas black-, furnace black-, lamp black- und thermal black-Verfahren hergestellt und werden nach der neuen ASTM-Nomenklatur (ASTM D 1765 und D 2516) als N 110, N 115, N 121, N 125, N 212, N 220, N 231, N 234, N 242, N 293, N 299, S 315, N 326, N 330, N 332, N 339, N 343, N 347, N 351, N 375, N 472, N 539, N 550, N 582, N 630, N642, N 650, N 660, N 683, N 754, N 762, N 765, N 772, N 774, N 787, N 907, N 908 N 990, N 991 S 3 etc. bezeichnet. Gegebenenfalls als Füllstoff einzusetzende Ruße besitzen bevorzugt BET-Oberflächen zwischen 5 bis 200 m²/g.

Weitere Füllstoffe, die in der Kautschuk Komponente eingesetzt werden können, sind solche der Reihe synthetische Silikate, insbesondere Aluminiumsilikat, Erdalkalisilikat, insbesondere Magnesiumsilikat oder Calciumsilikat mit BET-Oberflächen von 20-400 m²/g und Primärteilchendurchmessern von 5-400 nm, natürliche Silikate, wie Kaolin, Kieselgur und andere natürlich vorkommende Kieselsäuren, Metalloxide, insbesondere Aluminium-oxid, Magnesiumoxid, Calciumoxid, Metallcarbonate, insbesondere Calciumcarbonat, Magnesiumcarbonat, Zinkcarbonat, Metallsulfate, insbesondere Calciumsulfat, Bariumsulfat, Metallhydroxide, insbesondere Aluminiumhydroxid oder Magnesiumhydroxid, Glasfasern oder Glasfaserprodukte (Latten, Stränge oder Mikroglaskugeln), Thermoplaste (Polyamid, Polyester, Aramid, Polycarbonat, syndiotaktisches 1,2 Polybutadien oder trans-1,4-Polybutadien) sowie Cellulose, Cellulosederivate oder Stärke.

Im Falle des Einsatzes von zusätzlichen Mastiziermitteln in der Kautschuk Komponente wird bevorzugt wenigstens ein Mastiziermittel der Reihe Thiophenole, Thiophenolzinksalze, substituierte aromatische Disulfide, Peroxide, Thiocarbonsäure-Derivate, Nitrosoverbindungen, Hydrazinderivate, Porofore (Treibmittel) oder Metallkomplexe, insbesondere Eisenhemiporphyrazin, Eisenphthalocyanin, Eisenacetonylacetat oder dessen Zinksalz eingesetzt (J. Schnetger "Lexikon der Kautschuktechnik" 3. Auflage, Hüthig Verlag Heidelberg, 2004, Seite 1 bis 2). Die Funktionsweise der Mastiziermittel wird in EP 0 603 611 A1 beschrieben.

Im Falle des Einsatzes von zusätzlichen Weichmachern in der Kautschuk Komponente wird bevorzugt wenigstens ein Weichmacher der Reihe paraffinische Mineralöle, naphthenische Mineralöle, aromatische Mineralöle, aliphatische Ester, aromatische Ester, Polyester, Phosphate, Ether, Thioether, natürliche Fette oder natürliche Öle eingesetzt (F.Röthemeyer, F.Sommer "Kautschuktechnologie", 2. überarbeitete Auflage, Carl Hanser Verlag München Wien, 2006, Seite 329 bis 337).

Im Falle des Einsatzes von zusätzlichen Verarbeitungswirkstoffen in der Kautschuk Komponente wird bevorzugt wenigstens ein Verarbeitungswirkstoff der Reihe Fettsäuren, Fettsäure-Derivate, Fettsäureester, Fettalkohole oder Faktis eingesetzt (F. Röthemeyer, F. Sommer "Kautschuktechnologie", 2. überarbeitete Auflage, Carl Hanser Verlag München Wien, 2006, Seite 337 bis 338). Faktis, auch bekannt als Ölkautschuk, ist ein gummiartiger Werkstoff, der durch Vernetzung ungesättigter Mineral- und Pflanzenöle, in Europa vor allem von Raps-(Rüb-) und Rizinusöl sowie in Amerika zusätzlich von Sojaöl, entsteht. Siehe hierzu auch http://de.wikipedia.org/wiki/Faktis.

Im Falle des Einsatzes von zusätzlichen Alterungs-, UV- und Ozonschutzmitteln in der Kautschuk Komponente wird bevorzugt wenigstens ein Alterungs-, UV- und Ozonschutzmittel der Reihe UV-Stabilisatoren (Ruß, Titandioxid), Ozonschutzwachse, Hydroperoxide zersetzende Additive (Tris-nonylphenyl-phosphit), Schwermetall-Stabilisatoren, substituierte Phenole, Diarylamine, substituierte p-Phenylendiamine, heterozyklische Mercaptoverbindungen, Paraffinwachse, mikrokristalline Wachse oder Paraphenylendiamine eingesetzt (F. Röthemeyer, F. Sommer "Kautschuktechnologie", 2. überarbeitete Auflage, Carl Hanser Verlag München Wien, 2006, Seite 338 bis 344).

Im Falle des Einsatzes von zusätzlichen Klebrigmacher-Harzen in der Kautschuk Komponente wird bevorzugt wenigstens ein Klebrigmacher-Harz der Reihe Naturharz, Kohlenwasserstoffharz oder Phenolharz eingesetzt (F. Röthemeyer, F. Sommer "Kautschuktechnologie", 2. überarbeitete Auflage, Carl Hanser Verlag München Wien, 2006, Seite 345 bis 346).

Im Falle des Einsatzes von zusätzlichen Pigmenten und Farbstoffen in der Kautschuk Komponente wird bevorzugt wenigstens ein Pigment oder Farbstoff der Reihe Titandioxid, Lithopone, Zinkoxid, Eisenoxid, Ultramarinblau, Chromoxid, Antimonsulfid oder organische Farbstoffe eingesetzt (F. Röthemeyer, F. Sommer "Kautschuktechnologie", 2. Überarbeitete Auflage, Carl Hanser Verlag München Wien, 2006, Seite 345).

Im Falle des Einsatzes von zusätzlichen Treibmitteln in der Kautschuk Komponente wird bevorzugt wenigstens ein Treibmittel der Reihe Benzolsulfohydrazid, Dinitrosopentamethylentretramin oder Azodicarbonamid eingesetzt (F. Röthemeyer, F. Sommer "Kautschuktechnologie", 2. überarbeitete Auflage, Carl Hanser Verlag München Wien, 2006, Seite 346).

Im Falle des Einsatzes von zusätzlichen Flammschutzmitteln in der Kautschuk Komponente wird bevorzugt wenigstens ein Flammschutzmittel der Reihe Aluminiumoxidhydrat, halogenierte Flammschutzmittel oder phosphorhaltige Flammschutzmittel eingesetzt (F. Röthemeyer, F. Sommer "Kautschuktechnologie", 2. überarbeitete Auflage, Carl Hanser Verlag München Wien, 2006, Seite 346).

Im Falle des Einsatzes von Formtrennmitteln in der Kautschuk Komponente wird bevorzugt wenigstens ein Formtrennmittel der Reihe gesättigte und teilweise ungesättigte Fett- und Ölsäuren oder deren Derivate, insbesondere Fettsäureester, Fettsäuresalze, Fettalkohole, Fettsäureamide, eingesetzt. Im Fall der Applikation der Formtrennmittel auf die Formoberfläche können bevorzugt Produkte auf Basis von niedermolekularen Silikonverbindungen, Produkte auf Basis von Fluorpolymeren sowie Produkte auf Basis von Phenolharzen eingesetzt werden.

Im Falle des Einsatzes von Festigkeitsträgern (Fasern) in der Kautschuk Komponente zur Verstärkung der Vulkanisate wird bevorzugt wenigstens ein Festigkeitsträger (Fasern) der Reihe Glas, gemäß US-A-4,826,721, Corde, Gewebe, Fasern aus aliphatischen oder aromatischen Polyamiden (Nylon®, Aramid®), Polyestern oder Naturfaserprodukten eingesetzt. Eine beispielhafte Aufstellung von in der Kautschukindustrie üblichen Beimengungen findet man z.B. im SGF Rubber Handbook des schwedischen Instituts für Gummi Technologie, 10. Auflage.

Im Falle des Einsatzes eines Haftungssystems in der Kautschuk Komponente zur Bindung an textile oder metallische Festigkeitsträger innerhalb der Kautschuk Komponente wird bevorzugt wenigstens ein Haftungssystem der Reihe Resorcin-Harze, FormaldehydHarze oder Resorcin-Formaldehyd-Silica-Systeme (z.B. Cohedur-Typen der LANXESS Deutschland GmbH) ("Handbuch für die Gummi-Industrie", 2. Auflage, Bayer AG Leverkusen, 1991, S. 499 bis 524) eingesetzt.

Erfindungsgemäß eingeschlossene Erscheinungsformen der Kautschuk Komponente sind geschäumte Vulkanisate, Zellgummi oder auch Moosgummi (J. Schnetger "Lexikon der Kautschuktechnik" 3. Auflage, Hüthig Verlag Heidelberg, 2004, Seiten 322-323 und 618). In einer bevorzugten Ausführungsform werden geschäumte Vulkanisate mit Hilfe von Treibmitteln hergestellt.

Bevorzugt wird die für das erfindungsgemäße Formgebungsverfahren einzusetzende mit Schwefel zu vernetzende Kautschuk Komponente aus wenigstens einem Kautschuk, Schwefel und gegebenenfalls weiteren Bestandteilen mittels des Vorgangs der sogenannten Mischungsverarbeitung mit Hilfe eines Innenmischers oder eines Walzwerks zu einer vulkanisierfähigen Kautschukmischung verarbeitet und damit für das eigentliche Formgebungsverfahren vorbereitet. Bei dieser Mischungsverarbeitung werden die Bestandteile der Kautschukmischungen innig miteinander vermischt. Prinzipiell kann die Mischungsherstellung diskontinuierlich mittels Innermischer oder Walzwerk oder kontinuierlich mittels Extruder erfolgen (J. Schnetger "Lexikon der Kautschuktechnik" 3. Auflage, Hüthig Verlag Heidelberg, 2004, Seiten 275 und 315 bis 318).

Das für die Polyamid Komponente des Verbundteils einzusetzende Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, bevorzugt PA6, PA66, PA610, PA88, PA612, PA810, PA108, PA9, PA613, PA614, PA812, PA1010, PA10, PA814, PA148, PA1012, PA11, PA1014, PA1212 oder PA12. Erfindungsgemäß besonders bevorzugt wird für die im 2K-Spritzgießprozess einzusetzende Polyamidformmasse PA6 oder PA66 eingesetzt, insbesondere PA6. Die Herstellung der Polyamide ist Stand der Technik. Selbstverständlich können aber auch auf den oben genannten Polyamiden basierende Copolyamide eingesetzt werden.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden. Die technisch relevanten Verfahren zur Herstellung der im Stoffgemisch einzusetzenden Polyamide verlaufen bevorzugt über die Polykondensation in der Schmelze. Erfindungsgemäß wird hierunter auch die hydrolytische Polymerisation von Lactamen als Polykondensation verstanden. Die Herstellung von Polyamiden durch thermische Polykondensation ist dem Fachmann bekannt, siehe unter anderem Nylon Plastics Handbook, Hanser-Verlag München 1995, Seiten 17-27 und Kunststoff-Handbuch 3/4, Polyamide, Carl Hanser Verlag, München 1998, Seiten 22-36.

Erfindungsgemäße bevorzugt einzusetzende Polyamide sind teilkristalline, aliphatische Polyamide, die ausgehend von Diaminen und Dicarbonsäuren und/oder Lactamen mit wenigstens 5 Ringgliedern oder entsprechenden Aminosäuren hergestellt werden können.

Als Edukte zur Herstellung des Polyamid basierten Teilstücks kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Pentamethylendiamin, Hexamethylendiamin, 1,9-Nonandiamin, 2,2,4- und 2,4,4-Trimethylhexamethylendiamin, die Isomeren Diaminodicyclohexylmethane, Diaminodicyclohexylpropane, Bis-aminomethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt sind Polyamid 6 (PA-6), Polyamid 66 (PA-66) und Caprolactam als Comonomer enthaltende Copolyamide.

Insbesondere bevorzugt sind statistische, teilkristalline, aliphathische Copolyamide PA 6/66, polymerisiert aus ε-Caprolactam und Hexamethylendiaminadipat.

ε-Caprolactam (CAS-Nummer 105-60-2) wird bevorzugt unter anderem zur Herstellung von Polyamid verwendet. Aus Cyclohexanon wird durch Umsetzung mit dem Hydrogensulfat oder dem Hydrochlorid des Hydroxylamins zunächst Cyclohexanonoxim hergestellt. Dieses wird durch eine Beckmann-Umlagerung in ε-Caprolactam umgewandelt.

Hexamethylendiaminadipat (CAS-Nummer 3323-53-3) ist das Reaktionsprodukt von Adipinsäure und Hexamethylendiamin. Es wird unter anderem auch als Zwischenprodukt bei der Herstellung von Polyamid 66 verwendet. Der Trivialname AH-Salz leitet sich von den Anfangsbuchstaben der Ausgangssubstanzen ab.

Selbstverständlich können auch Mischungen dieser Polyamide eingesetzt werden, wobei das Mischungsverhältnis beliebig ist.

Es können außerdem Anteile von rezyklierten Polyamid-Formmassen und / oder Faserrezyklaten in der Polyamid Komponente enthalten sein.

Ebenso können auch Mischungen verschiedener Polyamide, ausreichende Verträglichkeit vorausgesetzt, verwendet werden. Verträgliche Polyamidkombinationen sind dem Fachmann bekannt. Bevorzugt einzusetzende Polyamidkombinationen sind PA6/PA66, PA12/PA1012, PA12/1212, PA612/PA12, PA613/PA12, PA1014/PA12 oder PA610/PA12 sowie entsprechende Kombinationen mit PA11, besonders bevorzugt PA6/PA66. Im Zweifelsfall können verträgliche Kombinationen durch Routineversuche ermittelt werden.

Anstelle von aliphatischen Polyamiden kann vorteilhafterweise auch ein teilaromatisches Polyamid verwendet werden, dessen Dicarbonsäureanteil zu 5 bis 100 Mol.-% von aromatischer Dicarbonsäure mit 8 bis 22 C-Atomen herrührt und das vorzugsweise einen Kristallitschmelzpunkt Tₘ gemäß ISO 11357-3 von mindestens 250 °C, besonders bevorzugt von mindestens 260 °C und insbesondere bevorzugt von mindestens 270 °C besitzt. Derartige Polyamide werden üblicherweise mit dem Zusatz T (= teilaromatisch) bezeichnet. Sie sind herstellbar aus einer Kombination von Diamin und Dicarbonsäure, gegebenenfalls unter Zusatz einer ω-Aminocarbonsäure oder dem entsprechenden Lactam. Geeignete Typen sind bevorzugt PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam. Das teilaromatische Polyamid kann auch als Blend mit einem anderen, bevorzugt aliphatischen Polyamid, eingesetzt werden, besonders bevorzugt mit PA6, PA66, PA11 oder PA12.

Eine andere geeignete Polyamidklasse sind transparente Polyamide; diese sind in den meisten Fällen amorph, können aber auch mikrokristallin sein. Sie können entweder für sich oder in Mischung mit aliphatischen und/oder teilaromatischen Polyamiden, bevorzugt PA6, PA66, PA11 oder PA12, eingesetzt werden. Zum Erzielen einer guten Haftung kommt es nicht auf das Ausmaß der Transparenz an; entscheidend ist hier, dass der Glasübergangspunkt Tg, gemessen gemäß ISO 11357-3, mindestens 110 °C, bevorzugt mindestens 120 °C, besonders bevorzugt mindestens 130 °C und besonders bevorzugt mindestens 140 °C beträgt. Bevorzugte transparente Polyamide sind:
- das Polyamid aus 1,12-Dodecandisäure und 4,4'-Diaminodicyclohexylmethan (PAPACM12), insbesondere ausgehend von einem 4,4'-Diaminodicyclohexylmethan mit einem trans,trans-Isomerenanteil von 35 bis 65%;
- das Polyamid aus Terephthalsäure und/oder Isophthalsäure und dem Isomerengemisch aus 2,2,4- und 2,4,4-Trimethylhexamethylendiamin,
- das Polyamid aus Isophthalsäure und 1,6-Hexamethylendiamin,
- das Copolyamid aus einem Gemisch aus Terephthalsäure/Isophthalsäure und 1.6-Hexamethylendiamin, gegebenenfalls in Mischung mit 4,4'-Diaminodicyclohexylmethan,
- das Copolyamid aus Terephthalsäure und/oder Isophthalsäure, 3,3'-Dimethyl-4,4'-diaminodicyclohexylmethan aus Laurinlactam oder Caprolactam,
- das (Co)Polyamid aus 1,12-Dodecandisäure oder Sebacinsäure, 3,3'-Dimethyl-4,4'diaminodicyclohexylmethan und gegebenenfalls Laurinlactam oder Caprolactam,
- das Copolyamid aus Isophthalsäure, 4,4'-Diaminodicyclohexylmethan und Laurinlactam oder Caprolactam,
- das Polyamid aus 1,12-Dodecandisäure und 4,4'-Diaminodicyclohexylmethan (bei niedrigem trans,trans-Isomerenanteil),
- das Copolyamid aus Terephthalsäure und/oder Isophthalsäure sowie einem alkylsubstituierten Bis(4-aminocyclohexyl)methan-Homologen, gegebenenfalls in Mischung mit Hexamethylendiamin,
- das Copolyamid aus Bis(4-amino-3-methyl-5-ethyl-cyclohexyl)methan, gegebenenfalls zusammen mit einem weiteren Diamin, sowie Isophthalsäure, gegebenenfalls zusammen mit einer weiteren Dicarbonsäure,
- das Copolyamid aus einer Mischung von m-Xylylendiamin und einem weiteren Diamin, z.B. Hexamethylendiamin, sowie Isophthalsäure, gegebenenfalls zusammen mit einer weiteren Dicarbonsäure wie z.B. Terephthalsäure und/oder 2,6-Naphthalindicarbonsäure,
- das Copolyamid aus einer Mischung von Bis(4-amino-cyclohexyl)methan und Bis-(4-amino-3-methyl-cyclohexyl)methan sowie aliphatischen Dicarbonsäuren mit 8 bis 14 C-Atomen, sowie
- Polyamide oder Copolyamide aus einer Mischung, die 1,14-Tetradecandisäure sowie ein aromatisches, arylaliphatisches oder cycloaliphatisches Diamin enthält.

Diese Beispiele können durch Hinzunahme weiterer Komponenten, bevorzugt Caprolactam, Laurinlactam oder Diamin/Dicarbonsäure-Kombinationen, oder durch teilweisen oder vollständigen Ersatz von Ausgangskomponenten durch andere Komponenten weitestgehend variiert werden.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden, insbesondere Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

Polyamidformmassen im Sinne dieser Erfindung sind Aufbereitungen von Polyamiden, die zur Verbesserung der Verarbeitungseigenschaften oder zur Modifizierung der Gebrauchseigenschaften vorgenommen wurden. In einer bevorzugten Ausführungsform enthalten diese Polyamidformmassen zusätzlich zum Polyamid und TOR wenigstens einen der folgenden Zusätze
a) andere Polymere wie etwa Schlagzähmodifikatoren, ABS oder Polyphenylenether. Hierbei ist darauf zu achten, dass keine Phasenumkehr stattfindet, dass also die Matrix der Formmasse aus Polyamid gebildet wird oder dass zumindest ein interpenetrierendes Netzwerk vorliegt. Dem Fachmann ist bekannt, dass die Phasenmorphologie in erster Linie von den Volumenanteilen der einzelnen Polymere sowie den Schmelzeviskositäten abhängt. Wenn das andere Polymer eine deutlich höhere Schmelzeviskosität als das Polyamid besitzt, bildet das Polyamid auch dann die Matrix, wenn es zu weniger als 50 Volumenprozent des Thermoplastanteils, beispielsweise zu etwa 40 Volumenprozent, vorliegt. Dies ist insbesondere bei Blends mit Polyphenylenether relevant;
b) faserförmige Verstärkungsstoffe, insbesondere Glasfasern mit rundem oder flachem Querschnitt, Carbonfasern, Aramidfasern, Fasern aus rostfreiem Stahl oder Kaliumtitanatwhisker;
c) Füllstoffe, insbesondere Talkum, Glimmer, Silikat, Quarz. Zirkondioxid, Aluminiumoxid, Eisenoxide, Zinksulfid, Graphit, Molybdändisulfid, Titandioxid, Wollastonit, Kaolin, amorphe Kieselsäuren, Magnesiumcarbonat, Kreide, Kalk, Feldspat, Bariumsulfat, Leitfähigkeitsruß, Graphitfibrillen, Vollglaskugeln, Hohlglaskugeln oder gemahlenes Glas;
d) Weichmacher, insbesondere Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure;
e) Pigmente und/oder Farbstoffe, insbesondere Ruß, Eisenoxid, Zinksulfid, Ultramarin, Nigrosin, Perlglanzpigmente oder Metallflitter;
f) Flammschutzmittel, insbesondere Antimontrioxid, Hexabromcyclododecan, Tetrabrombisphenol, Borate, roter Phosphor, Magnesiumhydroxid, Aluminiumhydroxid, Melamincyanurat und dessen Kondensationsprodukte wie Melam, Melem, Melon, Melaminverbindungen, insbesondere Melaminpyrophosphat oder Melaminpolyphosphat, Ammoniumpolyphosphat sowie phosphororganische Verbindungen bzw. deren Salze, insbesondere Resorcinoldiphenylphosphat, Phosphonsäureester oder Metallphosphinate;
g) Verarbeitungshilfsmittel, insbesondere Paraffine, Fettalkohole, Fettsäureamide, Fettsäureester, verseifte Fettsäuren, Paraffinwachse, Montanate, Montanwachse oder Polysiloxane sowie
h) Stabilisatoren, insbesondere Kupfersalze, Molybdänsalze, Kupferkomplexe, Phosphite, sterisch gehinderte Phenole, sekundäre Amine, UV-Absorber oder HALS-Stabilisatoren.

Das erfindungsgemäß als Additiv in der Polyamid Komponente einzusetzende Polyalkenamers, insbesondere das 1,8-trans-Polyoctenamer, wird gemäß der EP-B 0 508 056 hergestellt. Die Molmasse des erfindungsgemäß insbesondere bevorzugt einzusetzenden 1,8-trans-Polyoctenamers beträgt bevorzugt 90 000 g/mol bis 120 000 g/mol, besonders bevorzugt 100 000 g/mol. Der Kristallinitätsanteil des erfindungsgemäß insbesondere bevorzugt einzusetzenden 1,8-trans-Polyoctenamers bei Raumtemperatur beträgt bevorzugt 20 bis 30 %.

Erfindungsgemäß insbesondere ganz besonders bevorzugt wird 1,8-trans-Polyoctenamer-Kautschuk mit einem mittleren Molekulargewicht von 1,0 • 10⁵ g/mol und einem trans/cis-Doppelbindungsverhältnis von 80:20, also Vestenamer® 8012, eingesetzt.

Das erfindungsgemäß einzusetzende Polyalkenamer, insbesondere TOR, wird auf verschiedene Weise ins Polyamid bzw. in die Polyamid Komponente eingearbeitet. In einer bevorzugten Ausführungsform wird das Polyalkenamer, insbesondere TOR, entweder während der Compoundierung zusammen mit den übrigen Zuschlagstoffen dem Polyamid beigefügt, oder als Masterbatch dem Polyamid während der Compoundierung zugegeben, oder als Mischung mit der Polyamid Formmasse, die zumeist als Granulat eingesetzt wird, über einen Dosiertrichter dem Spritzaggregat zugeführt.

In einer alternativen bevorzugten Ausführungsform wird das Polyalkenamer, bevorzugt TOR, in Form einer Granulatmischung (Dry Blend) aus einer Polyalkenamer- bzw. TORenthaltenden Polyamid Formmasse und einer weiteren nicht Polyalkenamer- bzw. TORenthaltenden Polyamid Formmasse hergestellt und damit eine Polyamid Formmasse mit einer angepassten TOR-Konzentration erhalten.

In einer weiteren alternativen bevorzugten Ausführungsform wird eine Lösung von Polyoctenamer, bevorzugt TOR, in einem geeignetem Lösungsmittel mit einer Lösung des Polyamids in einem geeignetem Lösungsmittel gemischt. Wenn man ausgehend von dieser Lösung die Lösungsmittel abdestilliert, erhält man nach Trocknung die Polyalkenamer- bzw. TOR-enthaltende Polyamid Formmasse.

Erfindungsgemäß besonders bevorzugt erfolgt die Zugabe von Polyalkenamer, bevorzugt von TOR, zum Polyamid über einen Dosiertrichter im Spritzaggregat oder während der Compoundierung zusammen mit den übrigen Zuschlagstoffen, insbesondere bevorzugt während der Compoundierung zusammen mit den übrigen Zuschlagstoffen.

Die Verbundteile können einstufig oder zweistufig durch wenigstens ein Formgebungsverfahren der Reihe Extrusion, Pressverfahren, Spritzprägeverfahren, Transferpressverfahren, Transferspritzpressverfahren oder Spritzgießen oder dessen Sonderverfahren, insbesondere Gasinjektionstechnik, hergestellt werden, bevorzugt durch 2-Komponenten-Spritzgießen, auch als 2K-Spritzguß bezeichnet.

Unter dem Formgebungsverfahren der Extrusion wird erfindungsgemäß die kontinuierliche Herstellung von Kunststoff-Halbzeugen, insbesondere von Folien, Platten, Rohren oder Profilen, verstanden. Beim Extrusionsverfahren presst der sogenannte Extruder, bestehend aus Schnecke und Zylinder, die Kunststoffmasse unter Druck kontinuierlich durch eine formgebende Öffnung in das Formwerkzeug. In der Praxis werden Einschnecken-, Zweischnecken-Extruder oder Sonderbauarten eingesetzt. Mit der Wahl des Formwerkzeugs wird der gewünschte Querschnitt des Extrudats eingestellt (Ullmann's Encyclopedia of Industrial Chemistry, 7th Edition, Vol. 28, Plastics Processing, Wiley-VCH Verlag, Weinheim, 2011, S. 169 bis 177).

Bei der Extrusion von Kautschukmischungen erfolgt nach dem Durchgang durch die formgebende Öffnung noch die Vulkanisation. Hier wird zwischen Vulkanisationsverfahren unter Druck und drucklosen Vulkanisationsverfahren unterschieden (F. Röthemeyer, F. Sommer "Kautschuktechnologie", 2. überarbeitete Auflage, Carl Hanser Verlag München Wien, 2006, Seite 597 bis 727). Beim Formgebungsverfahren der Coextrusion werden Polyamidformmassen und Kautschukmassen vor der formgebenden Öffnung zusammengebracht, um nach der Vulkanisation des Extrudats ein Verbundteil aus Polyamid und Gummi bzw. Kautschuk zu erhalten (Ullmann's Encyclopedia of Industrial Chemistry, 7th Edition, Vol. 28, Plastics Processing, Wiley-VCH Verlag, Weinheim, 2011, S. 177). Die Coextrusion von Polyamidformmasse und Kautschukmasse kann auch sequentiell, d.h. nachgeschaltet, erfolgen (F. Röthemeyer, F. Sommer "Kautschuktechnologie", 2. überarbeitete Auflage, Carl Hanser Verlag München Wien, 2006, Seite 852 bis 853). Beim Beaufschlagen und Ausvulkanisieren nach dem zweistufigen Extrusionsverfahren wird ein in einer ersten Stufe hergestelltes Profil aus einer Polyamidformmasse, z.B. ein Rohr, mit einer Kautschukmasse ummantelt und gegebenenfalls unter Druck ausvulkanisiert. Entsprechend verfährt man mit Platten aus Polyamidformmassen (F. Röthemeyer, F. Sommer "Kautschuktechnologie", 2. Überarbeitete Auflage, Carl Hanser Verlag München Wien, 2006, Seite 977 bis 978).

Beim Pressverfahren (Compression Molding) werden zunächst über Extrusion mit anschließendem Stanzen oder Schneiden aus der unvulkanisierten Kautschukmischung Rohlinge hergestellt. Die Rohlinge werden in die Kavitäten eines auf Vulkanisationstemperatur vorgeheizten Werkzeugs eingelegt. Unter Anwendung von Druck und Wärme erfolgt die Formgebung in die gewünschte Formteilgeometrie und die Vulkanisation setzt ein (F. Röthemeyer, F. Sommer "Kautschuktechnologie", 2. überarbeitete Auflage, Carl Hanser Verlag München Wien, 2006, Seite 729 bis 738). Beim Compression Molding von Thermoplasten verfährt man analog. Hier wird das Werkzeug bis zum Entformen abgekühlt (Ullmann's Encyclopedia of Industrial Chemistry, 7th Edition, Vol. 28, Plastics Processing, Wiley-VCH Verlag, Weinheim, 2011, S. 167).

Das Spritzprägen (Injection-Compression Molding) ist ein Sonderverfahren des Spritzgießens zur Herstellung hochgenauer Kunststoffteile ohne Verzug. Dabei wird die Kunststoffschmelze nur unter erniedrigter Schließkraft in das Werkzeug eingespritzt, was zu einem leichten Öffnen der Werkzeughälften führt. Für die Ausfüllung der gesamten Werkzeugkavität wird die volle Schließkraft appliziert und so das Formteil endgültig ausgeformt (Ullmann's Encyclopedia of Industrial Chemistry, 7th Edition, Vol. 28, Plastics Processing, Wiley-VCH Verlag, Weinheim, 2011, S. 187). Beim Spritzprägen von Kautschuken verfährt man analog, indem die Kautschukmischung in ein auf Vulkanisationstemperatur geheiztes Werkzeug gespritzt wird. Mit Schließen des Werkzeugs erfolgt die Formgebung und die Vulkanisation (F. Röthemeyer, F. Sommer "Kautschuktechnologie", 2. überarbeitete Auflage, Carl Hanser Verlag München Wien, 2006, Seite 738 bis 739).

Zum Transferpressverfahren und Transferspritzpressverfahren siehe F. Röthemeyer, F. Sommer "Kautschuktechnologie", 2. überarbeitete Auflage, Carl Hanser Verlag München Wien, 2006, Kapitel 12.3 und 12.4, Seite 740 bis 753, und Kapitel 12.5., Seite 753 bis 755.

Das Spritzgießen - oft auch als Spritzguss oder Spritzgussverfahren bezeichnet - ist ein Urformverfahren, das hauptsächlich in der Kunststoffverarbeitung eingesetzt wird. Mit diesem Verfahren lassen sich wirtschaftlich direkt verwendbare Formteile ohne Nachbearbeitung in großer Stückzahl herstellen. Dazu wird mit einer Spritzgießmaschine der jeweilige polymere Werkstoff in einer Spritzeinheit plastifiziert und in ein Spritzgießwerkzeug eingespritzt. Der Hohlraum, die Kavität, des Werkzeugs bestimmt die Form des fertigen Teils. Es sind heute Teile von wenigen Zehntel Gramm bis in den größeren Kilogramm-Bereich durch Spritzgießen herstellbar (Ullmann's Encyclopedia of Industrial Chemistry, 7th Edition, Vol. 28, Plastics Processing, Wiley-VCH Verlag, Weinheim, 2011, S. 181 bis 189).

Beim zweistufigen Prozess wird aus der erfindungsgemäß einzusetzenden Polyalkenamer, bevorzugt TOR, enthaltenden Polyamidformmasse zunächst das steife, thermoplastische Formteil insbesondere durch eines der oben genannten Verarbeitungsverfahren, bevorzugt durch Spritzgießen, hergestellt. Dieses thermoplastische Formteil kann bei Bedarf gelagert werden.

In einem weiteren Schritt wird das thermoplastische Formteil mit der Kautschuk-Komponente mittels eines der oben genannten Verarbeitungsverfahren, bevorzugt durch Spritzgießen, beaufschlagt und den Vulkanisationsbedingungen des Kautschuks ausgesetzt.

Die Fertigung kann auch mit einer Maschine erfolgen (einstufiger Prozess), die bevorzugt über eine Wendeplatte oder einen Drehteller, und/oder über entsprechende Werkzeugtechnik, bevorzugt mittels Schiebern, verfügt, die zeitlich verzögert Bereiche der Kavität für die zweite Komponente freigeben. Beim Einsatz einer Maschine, die über eine Wendeplatte, einen Drehteller oder ein Werkzeug, das über einen oder mehrere Schieber verfügt, wird üblicherweise in einem ersten Takt ein Vorspritzling aus der Polyamid Komponente in einer Kavität des Werkzeuges hergestellt. Nach einer Drehbewegung des Werkzeuges, oder mittels Umsetztechnik, wird der Vorspritzling in eine geometrisch veränderte Fertigspritzstation gebracht (beispielsweise mittels der Drehtechnik durch eine Drehung um 180° bzw. 120° bei Dreikavitätenwerkzeugen) und in einem zweiten Takt wird die Kautschuk Komponente eingespritzt. Nach Erreichen der Entformungsstabilität der Kautschuk Komponente kann entformt werden.

Die Schmelzetemperaturen des erfindungsgemäß als thermoplastische Komponente einzusetzenden Polyamids liegen bevorzugt im Bereich von 180 bis 340 °C, besonders bevorzugt im Bereich von 200 bis 300 °C. Die Werkzeugtemperaturen der thermoplastischen Temperierbereiche liegen bevorzugt im Bereich von 20 bis 200 °C, besonders bevorzugt im Bereich von 80 bis 190°C, ganz besonders bevorzugt im Bereich von 140 bis 180°C. Bevorzugte Massetemperaturen der Kautschuk Komponente im Plastifizierzylinder liegen im Bereich von 20 bis 150 °C, bevorzugt im Bereich von 60 bis 100°C. Bevorzugte Vulkanisationstemperaturen der Kautschuk Komponente liegen im Bereich von 120 bis 220 °C, bevorzugt im Bereich von 140 bis 200 °C. In einer bevorzugten Ausführungsform erfolgt nach dem Entformen der Kautschuk Komponente aus der Werkzeugkavität eine Temperung. Eine Temperung erfolgt bevorzugt bei einer Temperatur im Bereich von 120 bis 220 °C, bevorzugt bei einer Temperatur im Bereich von 140 bis 200 °C.

Diese Werte sind erheblich abhängig von der Bauteilgeometrie (z.B. der Dicke sowie der Fließweglänge), der Art und Lage der Angussgestaltung (z.B. Heiß- oder Kaltkanal), sowie von den spezifischen Materialkennwerten. Die Nachdruckphase liegt bevorzugt in Bereichen von 0 bis 3000 bar bei Nachdruckzeiten von 0 Sekunden bis zum Öffnen des Werkzeuges.

In einer alternativen, bevorzugten Ausführungsform der vorliegenden Erfindung wird das Verbundteil aus der erfindungsgemäß einzusetzenden Polyalkenamer-, bevorzugt TOR-, enthaltenden Polyamidformmasse und dem in Anwesenheit von freiem Schwefel zu vernetzenden Kautschuk im sogenannten umgekehrten 2-Komponenten-Spritzguß (2K-Spritzguß) gefertigt, d.h. in der Reihenfolge erst die weiche Komponente, dann die harte Komponente.

Im umgekehrten 2K-Spritzguß wird also zunächst der Kautschuk spritzgegossen und vulkanisiert, danach wird die Polyamidformmasse aufgespritzt. Genau wie beim (konventionellen) 2K-Spritzgieß-Prozess kann die Fertigung in einer Maschine (einstufiger Prozess) erfolgen, die bevorzugt über eine Wendeplatte oder einen Drehteller, und/oder über entsprechende Werkzeugtechnik, bevorzugt mittels Schiebern, verfügt, die zeitlich verzögert Bereiche der Kavität für die zweite Komponente freigeben. Die entsprechenden Spritzgieß-Parameter können vom (konventionellen) 2K-Spritzgieß-Prozess übernommen werden (Zylindertemperaturen, Werkzeugtemperaturen, Vulkanisationszeiten, Nachdruck, Nachdruckzeiten, etc). Wenn man den Kautschuk nicht ausvulkanisiert, sondern nur bis zur Formstabilität anvulkanisiert und dann die Polyamidformmasse aufspritzt, erfährt man einen Vorteil des umgekehrten 2K-Spritzgieß-Prozesses. Auf diese Art und Weise lässt sich nämlich die Zykluszeit für die Herstellung des gesamten Verbundteils verkürzen. Da die Zykluszeit für die Herstellung der Polyamid Komponente üblicherweise sehr viel kleiner ist als die der Kautschuk Komponente, kann nach diesem bevorzugten Verfahren überraschenderweise die Zykluszeit für die Herstellung des gesamten Verbundteils auf die Zykluszeit für die Herstellung der Kautschuk Komponente reduziert werden. In einer bevorzugten Ausführungsform erfolgt auch im umgekehrten 2K-Spritzguß nach dem Entformen des Verbundteils aus der Werkzeugkavität eine Temperung.

Das Verfahren des Spritzgießens von Polyamid zeichnet sich dadurch aus, dass der Rohstoff, also die einzusetzende erfindungsgemäße Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet im Spritzgießprozess die Teilschritte:
1. Plastifizieren / Aufschmelzen
2. Einspritzphase (Füllvorgang)
3. Nachdruckphase (wegen thermischer Kontraktion bei der Kristallisation)
4. Entformen.

Eine zu diesem Zweck einzusetzende Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und gegebenenfalls die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gekühlt und somit das zu fertigende Bauteil bzw. das Erzeugnis oder der Formkörper gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung.

Zum Spritzgießen von Polyamiden siehe auch Kunststoff-Handbuch 3/4, Polyamide, Carl Hanser Verlag, München 1998, Seiten 315-352.

Das Verfahren des Spritzgießens zur Herstellung von Gummiformteilen zeichnet sich dadurch aus, dass der Rohstoff, also die zu vernetzende Kautschukmischung, in einem beheizten zylindrischen Hohlraum plastifiziert und als Spritzmasse unter Druck in einem auf Vulkanisationstemperatur temperierten Hohlraum gespritzt wird. Nach dem Ausvulkanisieren der Masse wird das Spritzgussteil entformt. Zylinder und Schnecken der Spritzgießmaschine sind in für den Fachmann bekannter Weise für die Kautschukverarbeitung ausgelegt und das Werkzeug auf Vulkanisationstemperatur beheizbar. Die Vulkanisationszeiten der Kautschuk Komponente richten sich außer nach der Kautschukmischung nach den Vulkanisationstemperaturen und nach der Geometrie der zu fertigenden Kautschuk Komponente. Sie liegen bevorzugt zwischen 15 s und 15 min; niedrigere Temperaturen und dickere Kautschukteile erfordern längere Vulkanisationszeiten (F. Röthemeyer, F. Sommer "Kautschuktechnologie", 2. überarbeitete Auflage, Carl Hanser Verlag München Wien, 2006, Seite 755 bis 815).

Im Falle des gegebenenfalls zusätzlichen Einsatzes äußerer Entformungshilfsmittel ist dafür Sorge zu tragen, dass diese nicht in die Grenzschicht der Werkstoffe gelangen, da sie die Verbundhaftung beeinträchtigen können. Als erfindungsgemäß gegebenenfalls einzusetzende Entformungsmittel (auch als Gleitmittel oder Formtrennmittel bezeichnet) kommen bevorzugt gesättigte und teilweise ungesättigte Fett- und Ölsäuren und deren Derivate, insbesondere Fettsäureester, Fettsäuresalze, Fettalkohole, Fettsäureamide, die vorzugsweise als Mischungsbestandteil Verwendung finden, in Betracht sowie weiterhin auf die Formoberfläche applizierbare Produkte, insbesondere Produkte auf Basis von niedermolekularen Silikonverbindungen, Produkte auf Basis von Fluorpolymeren sowie Produkte auf Basis von Phenolharzen.

Die Entformungsmittel werden als Mischungsbestandteil bevorzugt in Mengen von ca. 0,1 bis 10 phr, besonders bevorzugt 0,5 bis 5 phr, bezogen auf 100 phr der Elastomer(e) in der Kautschuk-Komponente eingesetzt.

Die vorliegende Erfindung betrifft zudem die Verwendung von Polyalkenamer, insbesondere von 1,8-trans-Polyoctenamer in der Polyamid Komponente zur Steigerung der Verbundhaftung eines Verbundteils aus mindestens einem Teilstück aus einer Polyamidformmasse und mindestens einem Teilstück aus einem mit elementarem Schwefel vulkanisierten Kautschuk, das durch wenigstens ein Formgebungsverfahren der Reihe Extrusion, Pressverfahren, Spritzprägeverfahren, Transferpressverfahren, Transferspritzpressverfahren oder Spritzgießen oder dessen Sonderverfahren, insbesondere Gas-Injektionstechnik, bevorzugt durch 2-Komponenten-Spritzgießen (2-K-Spritzguß) erhalten wurde.

### Beispiele:

Alle Prozentangaben sind Gewichtsprozente

Eingesetzte Polyamidkomponente:

| | |
|---|---|
| PA6TOR2 | = Polyamid6-Compound mit 2% TOR |
| PA6TOR5 | = Polyamid6-Compound mit 5% TOR |
| PA6TOR10 | = Polyamid6-Compound mit 10% TOR |

Als Polyamid 6 wurde Durethan® BKV 30 H2.0 der LANXESS Deutschland GmbH mit der ISO Formmassenbezeichnung ISO 1874-PA6, GHR, 14-090, GF 30, ein wärmestabilisiertes, mit 30% Glasfasern versetztes Polyamid 6 eingesetzt.

TOR = Vestenamer® 8012: 80% trans, M_{w} 90 000 g/mol, Tₘ= 54° C, 30% kristallin, der Evonik Degussa GmbH, Marl, Deutschland.

Das Vermischen des TOR mit dem Polyamid, das als Granulat in die 2K-Spritzgießmaschine eingesetzt wurde, erfolgte im Spritzaggregat.

Eingesetzte Kautschukkomponente:

**Tabelle 1**

| Mischung | |
|---|---|
| | phr |
| SMR 5 CV50 | 100 |
| Corax® N330 | 45 |
| Stearinsäure | 1 |
| ZnO | 5 |
| Rhenogran® S-80 | 2 |
| Rhenogran® ZDT-50 | 4,5 |
| Rhenogran® MBTS-70 | 1,37 |
| | |
| t₉₀(180°C) | 1,35 min |

| | |
|---|---|
| SMR 5CV50 = | Malaysischer Naturkautschuk mit einer konstanten Mooney-Viskosität ML (1 +4, 100 °C) von 50, Weber & Schaer GmbH |
| Corax® N330 = | Industrie-Ruß der Orion Engineered Carbons GmbH |
| Stearinsäure = | CAS-Nr. 57-11-4. |
| ZnO = | CAS-Nr. 1314-13-2 |
| Rhenogran® S-80 = | Polymergebundener elementarer Schwefel als Vulkanisationsmittel der Rhein Chemie Rheinau GmbH, Mannheim |
| Rhenogran® ZDT-50 = | Vulkanisationsbeschleuniger der Rhein Chemie Rheinau GmbH, Mannheim |
| Rhenogran® MBTS-70 = | Vulkanisationsbeschleuniger der Rhein Chemie Rheinau GmbH, Mannheim |

Die Herstellung der Kautschukmischungen erfolgte mittels eines Labor-Innenmischers Werner & Pfleiderer GK 5E.

**Tabelle 2: 2K-Spritzgießparameter**

| | Kautschuk | Thermoplast |
|---|---|---|
| Zylindertemperatur [°C] | 90 | 260/265/265/265/240 |
| Werkzeugtemperatur [°C] | 180 | 180 |
| Vernetzungszeit [min] | 3,5 | - |
| Einspritzgeschwindigkeit [cm³/s] | 7 | 25 |
| Nachdruckzeit [s] | 90 | 25 |
| Nachdruck [bar] | 300 | 500 (fallend auf 450) |

Das Ergebnis dieses Versuchs ist in Tabelle 3 dargestellt. Tabelle 3 zeigt, dass die Verwendung von Polyalkenamer additiviertem PA6, hier mit TOR additiviert, mit Schwefelvulkanisiertem Naturkautschuk NR signifikant hohe Haftwerte nach einem 2K-Spritzgießprozess erreicht. Der Spritzgießprozess wurde direkt betrieben, d.h. als einstufiger 2K-Spritzgieß-Prozess, und als zweistufiger 2K-Spritzgieß-Prozess mit PA-Einlegeteilen, d.h. zuerst Herstellung des PA-Spritzlings, Lagerung und erneutes Einlegen in die 2K-Spritzgießmaschine. Bei diesem zweistufigen 2K-Spritzgieß-Prozess wurde der PA-Spritzling vor dem erneuten Einlegen ins Werkzeug für 5 min auf die Werkzeugtemperatur vortemperiert.

In Tabelle 3 bedeuten:
- A=: NR1 + PA6TOR10 (einstufig)
- B=: NR1 + PA ohne TOR (einstufig)
- C=: NR1 + PA6TOR10 (zweistufig)
- D=: NR1 + PA6TOR5 (zweistufig)
- E=: NR1+ PA6TOR2 (zweistufig)

**Tabelle 3:**

| | A | B | C | D | E |
|---|---|---|---|---|---|
| Maximale Haftfestigkeit [N/mm] | 5,9 | 0 | 4,2 | 3,8 | 3,5 |

### Herstellung der Verbundprobeköper:

Zum Nachweis der Steigerung der Haftfestigkeit durch die erfindungsgemäße Werkstoffmodifikation wurden im Mehrkomponentenspritzgussprozess Verbundprobekörper hergestellt. Verwendet wurde eine Zweikomponentenspritzgussmaschine der Fa. Engel Austria GmbH, Schwertberg, Österreich, Typ Engel Combimelt 200H/200L/80, und als Spritzgusswerkzeug ein 2 Kavitäten Drehtellerwerkzeug.

Dazu wurde der Thermoplast - hier Polyamid - in die erste Kavität des Spritzgusswerkzeuges eingespritzt und eine 60 mm x 68 mm x 4 mm Platte hergestellt. Nach Ablauf der Kühlzeit, öffnete das Werkzeug und das thermoplastische Formteil auf Basis von Polyamid wurde um 180° gedreht und befand sich dann in der zweiten Kavität, in der der Kautschuk dann überspritzt wurde. Die Kautschukkavität hatte die Abmaße 140 mm x 25 mm x 6 mm und bildete einen Überlapp zur Thermoplastplatte von 44,5 mm x 25 mm. Nach dem Einspritzvorgang der Kautschuk Komponente und dem Vulkanisationsprozess im Spritzgusswerkzeug wurde anschließend das Werkzeug geöffnet und der Verbundprobekörper konnte entnommen werden.

Die im Rahmen der Arbeiten zur vorliegenden Erfindung hergestellten Verbundprobekörper entsprachen dem Standardverbundprobekörper wie er in Fig. 1 der EP 2 392 610 A1 dargestellt ist, worin K für die Kautschuk Komponente und T für den Thermoplast - hier Polyamid - steht. EP 2 392 610 A1 wird von der vorliegenden Anmeldung vollumfänglich umfasst.

### Prüfung der Verbundfestigkeit mittels Schälversuch:

Nach einer Lagerung der Verbundprobekörper auf Basis der Zusammensetzungen A, B, C, D und E von mindestens 24 Stunden wurden diese zur Prüfung der Verbundfestigkeit einem 90° Schälversuch unterzogen. Der Schälversuch wurde in Anlehnung an DIN 53289 an einer Universalprüfmaschine Zwick Z010 der Zwick GmbH & Co. KG, Ulm, Deutschland durchgeführt. Hierbei wurde der Verbundprüfkörper unter einem Winkel von 90° in eine Zugprüfmaschine mit spezieller Vorrichtung zur Aufnahme der Thermoplast Komponente - hier Polyamid Komponente - eingespannt und auf Zug belastet. Die Vorkraft betrug 0,3 N, die Prüfgeschwindigkeit 100 mm/min. Die maximale Verbundfestigkeit ergibt sich aus der maximal gemessenen Kraft in N bezogen auf die Breite der Elastomerkomponente - hier der Kautschuk Komponente - von 25 mm.

## Patentansprüche

1. Verbundteil, das aus mindestens einem Teilstück hergestellt aus mindestens einer Polyamidformmasse und mindestens einem Teilstück hergestellt aus wenigstens einem mit elementarem Schwefel zu vulkanisierenden Kautschuk unter Verzicht auf jeglichen Haftvermittler zusammengesetzt ist, **dadurch gekennzeichnet, dass** die Polyamidformmasse zu mindestens 40 Gew.-% aus der Mischung folgender Komponenten besteht:
a) 60 bis 99,9 Gew.-Teile Polyamid sowie
b) 0,1 bis 40 Gew.-Teile Polyalkenamer,
wobei die Summe der Gew.-Teile von a) und b) 100 beträgt.

2. Verbundteil gemäß Anspruch 1, **dadurch gekennzeichnet, dass** als Polyalkenamer 1,8-trans-Polyoctenamer eingesetzt wird.

3. Verbundteil gemäß Anspruch 2, **dadurch gekennzeichnet, dass** das 1,8-trans-Polyoctenamer eine Molmasse von 90 000 bis 120 000 g/mol, besonders bevorzugt von etwa 100 000 g/mol aufweist.

4. Verbundteil gemäß der Ansprüche 2 oder 3, **dadurch gekennzeichnet, dass** das 1,8-trans-Polyoctenamer einen Kristallinitätsanteil bei Raumtemperatur von 20 bis 30 % aufweist.

5. Verbundteil gemäß einem der Ansprüche 1 bis 4, **dadurch gekennzeichnet, dass** sich die mit Schwefel zu vernetzende Kautschuk Komponente durch die Gegenwart von C=C- Doppelbindungen auszeichnet.

6. Verbundteil gemäß Anspruch 5, **dadurch gekennzeichnet, dass** es sich bei den C=C-doppelbindungshaltigen Kautschuken um solche auf Basis von Dienen handelt.

7. Verbundteil gemäß Anspruch 6, **dadurch gekennzeichnet, dass** es sich um Kautschuke der Reihe Naturkautschuk (NR), Ethylen-Propylen-Dien Kautschuke (EPDM), Styrol/Diolefin-Kautschuke, bevorzugt Styrol/Butadienkautschuk (SBR), insbesondere E-SBR, Polybutadienkautschuk (BR), Polyisopren (IR), Styrol/- Isopren-Kautschuk (SIBR), Butadien/Isopren-Kautschuk (BIR), Butylkautschuk, insbesondere Isobuten/Isopren-Kautschuk (IIR), Halobutylkautschuk, insbesondere Chlor- oder Brombutylkautschuk (XIIR), Nitrilkautschuk (NBR), hydrierter Nitrilkautschuk (H-NBR), carboxylierter Butadien/Acrylnitril-Kautschuk (XNBR), Styrol/Butadien/Acrylnitril-Kautschuk (SNBR), carboxylierter Styrol/Butadien-Kautschuk (XSBR), Polychloropren (CR) oder epoxydierter Naturkautschuk (ENR) oder um Mischungen von zwei oder mehr der zuvor genannten Kautschuke handelt.

8. Verbundteil gemäß Anspruch 7, **dadurch gekennzeichnet, dass** wenigstens ein Kautschuk der Reihe NR (Naturkautschuk), SBR (Vinylaromat/Dien-Kautschuke), BR (Polybutadienkautschuk), IR (Polyisopren), IIR (Isobuten/Isopren-Kautschuk), BIR (Butadien/Isopren-Kautschuk) oder Mischungen daraus eingesetzt wird, bevorzugt wenigstens Naturkautschuk (NR).

9. Verbundteil gemäß einem der Ansprüche 1 bis 8, **dadurch gekennzeichnet, dass** als Polyamid PA6, PA66, PA610, PA88, PA612, PA810, PA108, PA9, PA613, PA614, PA812, PA1010, PA10, PA814, PA148, PA1012, PA11, PA1014, PA1212 oder PA12, bevorzugt PA6 oder PA66, besonders eingesetzt PA6 oder Mischungen der genannten Polyamide oder Caprolactam als Comonomer enthaltende Copolyamide eingesetzt werden.

10. Verbundteil gemäß Anspruch 9, **dadurch gekennzeichnet, dass** statistische, teilkristalline, aliphatische Copolyamide PA 6/66, polymerisiert aus ε-Caprolactam und Hexamethylendiaminadipat, eingesetzt werden.

11. Verbundteil gemäß Anspruch 9, **dadurch gekennzeichnet, dass** als Mischungen Polyamidkombinationen der Reihe PA6/PA66, PA12/PA1012, PA12/1212, PA612/PA12, PA613/PA12, PA1014/PA12 oder PA610/PA12 sowie entsprechende Kombinationen mit PA11, besonders bevorzugt PA6/PA66 eingesetzt werden.

12. Verwendung von Polyalkenamer, bevorzugt von 1,8-trans-Polyoctenamer zur Herabsetzung des Schmelzpunktes oder Erweichungspunktes von Polyamid.

13. Verwendung der Verbundteile gemäß einem der Ansprüche 1 bis 11 in flüssige Medien oder gasförmige Medien führenden Erzeugnissen, bevorzugt in der chemischen Industrie, der Haushaltsgeräteindustrie oder der Kraftfahrzeugindustrie, besonders bevorzugt als Dichtungen, Membranen, Schläuche, Gehäuse für Motoren, Pumpen und elektrisch betriebene Werkzeuge, Walzen, Reifen, Kupplungen, Anschlagpuffer, Transportbänder, Treibriemen sowie schall- und schwingungsdämpfende Bauteile.

14. Verfahren zur Abdichtung von flüssige Medien oder gasförmige Medien beinhaltenden Erzeugnissen unter Einsatz wenigstens eines Verbundteils gemäß einem der Ansprüche 1 bis 11.

15. Verfahren zur Herstellung von Verbundteilen die aus mindestens einem Teilstück hergestellt aus mindestens einer Polyamidformmasse und mindestens einem Teilstück hergestellt aus wenigstens einem mit elementarem Schwefel zu vulkanisierenden Kautschuk zusammengesetzt sind, **dadurch gekennzeichnet, dass** man unter Verzicht auf jeglichen Haftvermittler durch wenigstens ein Formgebungsverfahren der Reihe Extrusion, Pressverfahren, Spritzprägeverfahren, Transferpressverfahren, Transferspritzpressverfahren oder Spritzgießen oder dessen Sonderverfahren, insbesondere Gas-Injektionstechnik, bevorzugt durch 2-Komponenten-Spritzgießen, entweder das Teilstück aus der Polyamidformmasse mit einem elementaren Schwefel enthaltenden Kautschuk-Compound beaufschlagt und den Vulkanisationsbedingungen des Kautschuks aussetzt oder das Teilstück aus mit elementarem Schwefel vernetztem Kautschuk mit einer Polyamidformmasse beaufschlagt und in beiden Fällen die Polyamidformmasse zu mindestens 40 Gew.-%, bevorzugt zu mindestens 50 Gew.-%, besonders bevorzugt zu mindestens 60 Gew.-% und insbesondere bevorzugt zu mindestens 70 Gew.-% aus der Mischung folgender Komponenten besteht:
a) 60 bis 99,9 Gew.-Teile, bevorzugt 75 bis 99,8 Gew.-Teile und besonders bevorzugt 85 bis 99,7 Gew.-Teile und noch bevorzugter 88 bis 99,5 Gew.-Teile Polyamid sowie
b) 0,1 bis 40 Gew.-Teile, bevorzugt 0,2 bis 25 Gew.-Teile, besonders bevorzugt 0,3 bis 15 Gew.-Teile und noch bevorzugter 0,5 bis 12 Gew.-Teile Polyalkenamer, bevorzugt 1,8-trans-Polyoctenamer (TOR),
wobei die Summe der Gew.-Teile von a) und b) 100 beträgt.
